# EUROPÄISCHE PATENTSCHRIFT

(11) **EP 4 453 460 B1**
(45) Veröffentlichungstag und Bekanntmachung des Hinweises auf die Patenterteilung: **03.09.2025**
(21) Anmeldenummer: 22840104.8
(22) Anmeldetag: 19.12.2022
(51) Int. Cl.: F16K 37/00, F16K 31/122, F16K 27/02, F16K 31/126, G01D 3/00, F15B 15/28

(54) **ELEKTRONISCHE POSITIONSANZEIGE MITTELS ZAHNSTRUKTURMESSANORDNUNG**
ELECTRONIC POSITION INDICATOR BY MEANS OF TOOTH STRUCTURE MEASURING ARRANGEMENT
INDICATEUR DE POSITION ÉLECTRONIQUE AU MOYEN D'UN AGENCEMENT DE MESURE DE STRUCTURE DE DENT

(30) Priorität: 21.12.2021 DE 102021134121
(43) Veröffentlichungstag der Anmeldung: 30.10.2024
(73) Patentinhaber: Samson Aktiengesellschaft, 60314 Frankfurt am Main (DE)
(72) Erfinder: KOLBENSCHLAG, Stefan, 64291 Darmstadt (DE)
(74) Vertreter: Schmid, Nils T.F.
(86) Internationale Anmeldenummer: PCT/EP2022/086586
(87) Internationale Veröffentlichungsnummer: WO 2023/117859

(56) Entgegenhaltungen:
- KR-B1- 100 866 069
- US-A- 4 756 229
- US-A- 5 568 760

## Beschreibung

Die Erfindung betrifft ein Positions- und/oder Wegmesssystem für ein Stellventil. Ferner betrifft die Erfindung ein Stellventil für eine Prozessfluidströmung einer prozesstechnischen Anlage, wie ein Kraftwerk, eine Chemieanlage, eine Lebensmittel verarbeitende Anlage oder dergleichen.

Zum Bestimmen von Absolutwerten einer Ventilposition eines Stellventils sind verschiedene Systeme geläufig. Aus EP 3 161 361 A1 und EP 1 282 798 B1 sind Positionssensoren bekannt, welche innerhalb des Jochs zwischen einem Antrieb und einem Ventilgehäuse platziert sind, also in einem von Prozessfluid geschützten und einfach zugänglichen Bereich. EP 0 861 417 B1 beschreibt einen derartig anbringbaren Differential-Wegsensor, der ein Paar magnetische Wegsensoren verwendet, die mit verschiedenen rampen- oder keilförmigen Messkomponenten ausgestattet sind, die sich in entgegengesetzter Richtung verjüngen, um Fehlstellungen der Stellstange beispielsweise infolge von Verschleiß zu kompensieren. Die Verbindung der Sensorik mit der Stellstange erfolgt quer zur Hubrichtung des Ventils im Bereich des Jochs. Zur Messung der gesamten Hublänge wird das Innenmaß des Jochs in der Hubrichtung durch die Hublänge zuzüglich der Breite der Sensorkomponente zum Abgriff der Position bestimmt. Bei großen Hüben muss dann das Joch entsprechend lang ausgeführt werden.

DE 199 39 497 C2 beschreibt ein Stellventil mit einer Sensiereinheit zur Ventilpositionierung. Der Antrieb umfasst eine Antriebskrafteinheit, ein Joch zur festen Verbindung mit einem Ventil, eine Antriebsspindel zur Übertragung der Bewegung der Antriebskrafteinheit auf das Ventil und einer Sensiereinheit zur Erfassung der Ventilposition. Derartige Antriebe werden beispielsweise pneumatisch, hydraulisch oder elektrisch betrieben. Die Antriebskrafteinheit formt elektrische, thermische oder mechanische Energie in eine Bewegung einer Antriebsstange um, um einen Schub zu erzeugen. Die Sensiereinheit zur Messung der Ventilposition ist üblicherweise mechanisch an die Antriebsstange gekoppelt. Mit Hilfe dieser Sensiereinheit kann die wirkliche Position des Ventils überwacht und mittels eines Stellungsreglers, der häufig die Sensiereinheit beinhaltet, geregelt werden. Die Sensiereinheit umfasst in der Antriebsstange integriert eine magnetische Spur mit einer periodischen Struktur, einen mit dem Joch des Antriebs nahe der magnetischen Spur verbundenen Sensor, der zur Erfassung wechselnder Magnetfeldlinien geeignet ist, und im Bereich der magnetischen Spur und des Sensors mindestens einen Dauermagnet, dessen Magnetfeldlinien sowohl die magnetische Spur als auch den Sensor durchdringen. Die periodische Struktur der magnetischen Spur erstreckt sich längs der Bewegungsrichtung der Antriebsstange. Der Sensor umfasst zwei magnetoresistive Sensoren, die in Bewegungsrichtung der Antriebsstange gegeneinander versetzt sind. Mithilfe der zwei Sensoren kann die Bewegungsrichtung ermittelt werden. Es handelt sich bei dieser Art der Positionsbestimmung um ein inkrementales Wegmesssystem, bei dem die magnetische Spur als Maßstab wirkt, der keine absolute Information zur Position enthält, so dass mittels eines Zählers bzw. eines Speichers die Ventilposition bestimmt wird. Um einen definierten Bezugspunkt für die Ventilposition zu realisieren, kann ein von der magnetischen Spur unterschiedlichen Auslöser in der Antriebsspindel integriert sein, der in einer vorbestimmten Position ein charakteristisches Signal auslöst, das durch eine Logikschaltung beim Aufnehmen von Initialisierungsdaten berücksichtigt wird.

Bei konventionellen Stellventilen ist die Stellstange grob ausgerichtet, typischerweise am Stellantrieb und/oder am Ventilgehäuse, beispielsweise im Bereich einer Austrittsöffnung, wo Dichtungspackungen oder ähnliches vorgesehen sein können. In einem konventionellen Stellventil weicht die Haupterstreckungsrichtung der Stellstange von einer Orientierung korrespondierend zu einer idealen linearen Messrichtung einer Messvorrichtung des Stellventils ab. Beispielsweise kann die Haupterstreckungsrichtung in Relation zur Messachse der Messvorrichtung eine Abweichung in Form einer Neigung in einer ersten Ebene (Neigungsebene) aufweisen, die sich entlang der Messachse sowie quer dazu aufspannt, einen Kippwinkel in einer zweiten Ebene (Kippebene) aufweisen, die sich senkrecht zur Neigungsebene entlang der Hubrichtung aufspannt, einen radialen Versatz in der Neigungs- und/oder Kippebene, und/oder eine rotatorische Verdrehung um die Messachse aufweisen. Insbesondere Stellglieder mit einer rotationsasymmetrischen Form erfahren vom Prozessfluid ein Drehmoment, welches die Antriebsstange verdrehen kann. Bei einem dynamischen Verhalten des Stellventils kann sich die Abweichung während des Betriebs ändern. Die Montage einer Messvorrichtung an dem Stellventil erfolgt im Rahmen typischer Montagetoleranzen, welche mit unvermeidlichen Abweichungen zwischen Messachse und Haupterstreckungsrichtung der Stellachse einhergehen. Besonders bei langen Hubwegen können große Abweichungen zwischen Haupterstreckungsrichtung und Messachse und damit einhergehende Messfehler auftreten. Derartige Abweichungen von einer idealen Orientierung der Haupterstreckungsrichtung der Stellstange können signifikante und/oder unsystematische Messfehler zur Folge haben oder sogar dazu führen, dass Messvorrichtungen ausfallen.

US4756229A, KR100866069B1 und US5 568760A offenbaren Positions- und/oder Wegmesssysteme nach dem Oberbegriff von Anspruch 1.

Es ist eine Aufgabe der Erfindung, die Nachteile des Stands der Technik zu überwinden, insbesondere ein besonders präzises Positions- und/oder Wegmesssystem bereit zu stellen, das selbst bei langem Stellweg nur einen geringen Bauraum bedarf.

Diese Aufgabe löst der Gegenstand von Anspruch 1.

Demnach ist ein Positions- und/oder Wegmesssystem für eine Prozessfluidströmung einer prozesstechnischen Anlage, wie ein Kraftwerk, eine Chemieanlage, eine lebensmittelverarbeitende Anlage oder dergleichen vorgesehen. Das Positions- und/oder Wegmesssystem kann im Folgenden kurz als Messsystem bezeichnet sein. Das Positions- und/oder Wegmesssystem umfasst eine linearbewegliche Stellstange mit wenigstens einer Haupterstreckungsrichtung und wenigstens einer entlang der Haupterstreckungsrichtung ausgerichteten, kodierten Spur. Eine Stellstange hat typischerweise eine Haupterstreckung in einer Längsrichtung oder Axialrichtung, die wesentlich größer ist als die Ausdehung der Stellstange in Quer- bzw. Radialrichtung. Beispielsweise kann die Stellstange eine zylindrische Gestalt haben, mit einem Zylinderradius und einer durch die Zylinderachse definierten Haupterstreckungsrichtung. Die Spur ist insbesondere ortsfest, vorzugsweise materialschlüssig, mit der Stellstange verbunden, besonders bevorzugt integral mit der Stellstange gebildet. Insbesondere ist die wenigstens eine Spur inkremental oder kontinuierlich kodiert. Mehrere Spuren können gleich- oder verschiedenartig kodiert sein. Das Positions- und/oder Wegmesssystem umfasst ferner eine Messvorrichtung mit wenigstens einer vorzugsweise teilkreisförmigen Aussparung zum linearbeweglichen Aufnehmen der Stellstange und mit wenigstens einer an der Aussparung angeordneten Sensiereinheit. Die Messvorrichtung kann eine ideale lineare Messachse aufweisen, entlang welcher eine Relativbewegung optimal durch die wenigstens eine Sensiereinheit der Messvorrichtung erfassbar ist. Die Sensiereinheit ist zum Erfassen der wenigstens einen Spur ausgelegt und eingerichtet. Vorzugsweise ist die wenigstens eine Sensiereinheit zum berührungsfreien Erfassen der wenigstens einen Spur ausgelegt und eingerichtet.

Das erfindungsgemäße Positions- und/oder Wegmesssystem umfasst wenigstens eine oder genau eine im Bereich der Aussparung angeordnete Justiereinrichtung zum Orientieren der Stellstange relativ zur Messvorrichtung. Vorzugsweise ist die Justiereinrichtung dazu ausgelegt und eingerichtet, die Orientierung der Haupterstreckungsrichtung der Stellstange korrespondierend zu einer, insbesondere idealen linearen, Messachse der Messvorrichtung und/oder zur Hubachse der des Stellventils einzustellen. Insbesondere orientiert die Justiereinrichtung die Haupterstreckungsrichtung der Stellstange parallel, vorzugsweise kollinear, zur Messachse der Messvorrichtung. Vorzugsweise ist die Justiereinrichtung dazu ausgelegt und eingerichtet, eine zur Messvorrichtung korrespondierende, insbesondere parallele, vorzugsweise kollineare, Orientierung der Stellstange für einen Großteil des Hubwegs der Stellstange, insbesondere wenigstens 50%, vorzugsweise wenigstens 70%, besonders bevorzugt wenigstens 80 % oder wenigstens 90%, einzustellen oder für den gesamten Hubweg der Stellstange einzustellen.

Mit dem erfindungsgemäßen Positions- und/oder Wegmesssystem können die Stellstange und die Messvorrichtung derart aufeinander abgestimmt werden, dass die Sensiereinheit die Spur mit besonders hoher Genauigkeit erfassen kann. Selbst bei Stellstangen mit besonders langem Hubweg ist eine durchweg präzise Bestimmung der Position der Stellstange durch die Messvorrichtung gewährleistet.

Gemäß einer zweckmäßigen Ausführung eines Positions- und/oder Wegmesssystems ist die Justiereinrichtung dazu ausgelegt und eingerichtet, die Stellstange relativ zur Messvorrichtung mit einem Drehversatz bezüglich der Haupterstreckungsrichtung von nicht mehr als ±10 °, insbesondere nicht mehr als ±7°, vorzugsweise nicht mehr als ±4° zu orientieren. Bei einer zweckmäßigen Ausführung legt die Justiereinrichtung einen Drehversatz der wenigstens einen Spur in Relation zu der wenigstens einen Sensiereinrichtung im Bereich von nicht mehr als ±7° oder nicht mehr als ±9° relativ zu der Messachse fest. Bei einer bevorzugten Ausführung legt die Justiereinrichtung einen Drehversatz der wenigstens einen Spur in Relation zu der wenigstens einen Sensiereinrichtung im Bereich von nicht mehr als ±2° oder nicht mehr als ±3° relativ zu der Messachse fest. Insbesondere umfasst die Justiereinrichtung eine insbesondere formschlüssige Verdrehsicherung. Eine formschlüssige Verdrehsicherung kann beispielsweise realisiert sein als eine einseitige oder zweiseitige Schienenführung, eine Schwalbenschwanzführung oder dergleichen. Die formschlüssige Verdrehsicherung kann ein Linearlager, insbesondere ein Linearkugellager oder Lineargleitlager, zum Orientieren der Stellstange relativ zur Messvorrichtung, umfassen.

Bei dem Positions- und/oder Wegmesssystem orientiert die Justiereinrichtung die, vorzugsweise außenumfänglich rotationssymmetrische, Stellstange relativ zur Aussparung berührungsfrei. Vorzugsweise orientiert die Justiereinrichtung die Stellstange relativ zur Aussparung magnetisch. Insbesondere weist die Aussparung wenigstes einen Magneten, insbesondere Dauermagneten, auf, der als Richtmagnet bezeichnet sein kann, und die Stellstange eine magnetisierbare oder magnetische Richtstruktur. Die Richtstruktur der Stellstange erstreckt sich, insbesondere kontinuierlich, vorzugsweise an der Stellstange korrespondierend, vorzugweise parallel, zur Haupterstreckungsrichtung und/oder zu wenigstens einen Spur. In Richtung der Haupterstreckungsrichtung erstreckt sich die Richtstruktur insbesondere über einen Großteil, insbesondere wenigstens 50 %, vorzugsweise wenigstens 75 %, besonders bevorzugt wenigstens 90 %, der Länge der wenigstens einen Spur. Die Richtstruktur ist dazu ausgelegt und eingerichtet, mit der Justiereinrichtung, insbesondere der Verdrehsicherung, zu kooperieren, insbesondere um eine präzise Orientierung der Stellstange, insbesondere der wenigstens einen Spur, relativ zu der Messvorrichtung, insbesondere der wenigstens einen Sensiereinrichtung, zu veranlassen. Die Richtstruktur kann beispielsweise als ein sich kontinuierlich in der Haupterstreckungsrichtung ausdehnender Profilkörper, wie eine Rippe oder Nut, gebildet sein. Mithilfe eines oder mehrerer Magneten an der Messvorrichtung kann eine Stellstange mit einer sich entlang ihrer Haupterstreckungsrichtung ausdehnenden magnetisierbaren oder magnetischen Richtstruktur auf besonders einfache Weise orientiert werden, um einem Drehversatz der insbesondere rotationssymmetrischen Stellstange und der wenigstens einen daran vorgesehenen Spur in Relation zur der Messvorrichtung entgegenzuwirken, und/oder den Drehversatz zu minimieren oder aufheben. Ein Magnet oder mehrere Magnete an der Messvorrichtung können zusätzlich oder alternativ mit einer korrespondierenden magnetischen oder magnetisierbare Richtstruktur seitens der Stellstange kooperieren, um einen Kipp- und/oder Neige-Winkelversatz der Stellstange und der wenigstens einen daran vorgesehenen Spur in Relation zu Messvorrichtung entgegenzuwirken oder um den Kipp- und/oder Neige-Winkelversatz zu minimieren oder aufzuheben. Alternativ oder zusätzlich kann ein Magnet oder mehrere Magnete an der Messvorrichtung mit einer korrespondierenden magnetischen oder magnetisierbare Richtstruktur an der Stellstange kooperieren, um einem Versatz der Stellstange quer zur Messachse und/oder Hubachse, beispielsweise eine Parallelverschiebung, entgegenzuwirken, diesen zu minimieren oder aufzuheben. Dabei dient Einrichtung der Justiereinrichtung als berührungsfrei zwischen einerseits der Stellstange und andererseits der Messvorrichtung der Vermeidung von Verschleiß.

Gemäß einer anderen Ausführung eines Position- und/oder Wegmesssystems, die mit den vorigen kombinierbar ist, umfasst die Messvorrichtung eine Hülse, die die Aussparung definiert und die wenigstens eine Sensiereinheit trägt. Die Hülse ist insbesondere teilkreisförmig, wobei vorzugsweise die Teilkreisform sich über zumindest 120°, insbesondere zumindest 135°, vorzugsweise zumindest 180°, und/oder nicht mehr als 270°, insbesondere nicht mehr als 225°, in Umfangsrichtung bezüglich der Haupterstreckungsrichtung um die Stellstange erstreckt. Alternativ kann die Hülse vollkreisförmig sein.

Gemäß einer Weiterbildung eines Position- und/oder Wegmesssystems, bei der die Messvorrichtung eine Hülse aufweist, umfasst die Stellstange wenigstens eine entlang der Haupterstreckungsrichtung ausgerichtete, kodierte zweite Spur, wobei vorzugweise die zweite Spur relativ zur ersten Spur in Umfangsrichtung versetzt, beispielsweise um 60° oder 90° versetzt, angeordnet ist. Vorzugsweise korrespondiert der Versatz der Sensiereinheiten, also deren Winkelversatz in der Umfangsrichtung, zum Versatz der Spuren, der auch als Spurenversatz bezeichnet sein kann. Weiterhin trägt die Hülse wenigstens eine zweite Sensiereinheit, wobei die zweite Sensiereinheit zum vorzugsweise berührungsfreien Erfassen der zweiten Spur ausgelegt und eingerichtet ist, wobei vorzugweise die zweite Sensiereinheit relativ zur ersten Sensiereinheit in Umfangsrichtung versetzt, beispielsweise um 60° oder 90° versetzt, angeordnet ist. Indem an der Stellstange zwei Spuren oder mehr und an der Messvorrichtung pro Spur je wenigstens eine der jeweiligen Spur zugeordnete Sensiereinrichtung vorgesehen ist, können mithilfe der Messvorrichtung redundante und/oder miteinander kombinierbar Position- und/oder Weg-Messwerte erfasst werden. Es sei klar, dass die mehreren Spur-Sensiereinheit-Paare dasselbe Messprinzip oder unterschiedliche Messprinzipien verwenden können, beispielsweise magnetisch, haptisch, kapazitiv, induktiv und/oder optisch. Vorzugsweise arbeiten alle Sensiereinheiten berührungsfrei. Die mehreren Spuren können gleichartig oder auf unterschiedliche Weise codiert sein, insbesondere können die mehreren Spuren kontinuierlich und/oder diskret codiert sein. Eine kontinuierliche Kodierung kann beispielsweise rampen-, keil- oder kurvenförmig sein. Eine diskrete Kodierung kann beispielsweise inkremental, moduliert und/oder periodisch sein. Die Kodierung der verschiedenen Spuren kann in Bezug auf die Haupterstreckungsrichtung versetzt zueinander angeordnet sein. Es kann bevorzugt sein, zwei phasenversetzt kodierte Spuren vorzusehen. Durch die Verwendung mehrerer Spuren kann eine deutliche Steigerung der Qualität der Aussagekraft des Positions- und/oder Wegmesssystems erreicht werden. Insbesondere kann bei einer bevorzugten Ausführung mit zwei oder mehr Spuren die Messvorrichtung für eine absolute Positionsbestimmung ausgelegt und eingerichtet sein. Beispielsweise kann vorgesehen sein, dass im Verlauf der Stellstange in deren Haupterstreckungsrichtung eine, vorzugsweise kontinuierliche oder diskrete, Vielzahl unterschiedlicher eindeutiger Spuren-Messwert-Kombinationen bereitgestellt sind. Insbesondere ist, vorzugsweise innerhalb eines vorbestimmten Messbereichs, jeder Relativstellung der Stellstange bezüglich der Messvorrichtung jeweils eine einzige bestimmte Spuren-Messwert-Kombination zugeordnet, anhand welcher die Messvorrichtung die gegenwärtig vorliegende ist-Relativstellung eindeutig erkennen kann.

Bei einer mit der vorgenannten kombinierbaren Weiterbildung des Position- und/oder Wegmesssystems weist die Hülse einen ersten Kreisabschnitt auf, an dem die wenigstens eine Sensiereinheit sowie gegebenenfalls die zweite und/oder eine weitere Sensiereinheit angeordnet sind. Ferner weist die Hülse wenigstens einen zweiten Kreisabschnitt auf, der, vorzugsweise mittels eines Festkörpergelenks, beweglich mit dem ersten Kreisabschnitt verbunden ist. Vorzugsweise ist die Hülse als einstückiger, integraler Körper gebildet, der den ersten und den zweiten Kreisabschnitt umfasst. Dabei ist vorgesehen, dass der erste Kreisabschnitt eine teilumfängliche Öffnung zum Einsetzen der Stellstange aufweist und/oder dass der zweite Kreisabschnitt in Radialrichtung zumindest abschnittsweise diametral gegenüber dem ersten Kreisabschnitt angeordnet ist. Die Stellung kann zwischen den Kreisabschnitten gehalten sein. Vorzugsweise hat die Hülse einen Messzustand, in dem die Stellstange in der durch die Hülse definierten Aussparung insbesondere verliersicher gehalten ist, und/oder in dem die wenigstens eine Spur unter Einwirkung der Justiereinrichtung korrespondierend zu der wenigstens einen dieser Spur zugeordneten Sensiereinrichtung ausgerichtet ist. Vorzugsweise hat die Hülse einen Freigabezustand, in dem die Hülse zwischen dem ersten und dem zweiten Kreisabschnitt eine Öffnung aufweist, durch welche die Aussparung mit der Stellstange belegbar ist. Vorzugsweise ist die Hülse zwischen dem Freigabezustand und dem Messzustand, insbesondere durch elastische Deformation, verstellbar.

Gemäß einer bevorzugten Weiterbildung eines Position- und/oder Wegmesssystems mit einer in Kreisabschnitt untergliederten Hülse ist die Justiereinrichtung am zweiten Kreisabschnitt angeordnet. Optional kann zusätzlich an dem zweiten Kreisabschnitt eine zweite und/oder eine weitere Sensiereinrichtung angeordnet sein.

Gemäß einer bevorzugten Ausführung eines Positions- und/oder Wegmesssystems mit mehreren Spuren definiert die erste Spur ein erstes Modul und die zweite Spur definiert ein zweites Modul. Vorzugsweise ist das kleinste gemeinsame Vielfache des ersten und des zweiten Moduls ein ungerades Vielfaches des ersten und/oder des zweiten Moduls. Alternativ oder zusätzlich kann vorgesehen sein, dass das zweite Modul 2 % bis 50 %, insbesondere 3 % bis 30 %, vorzugsweise im Bereich 5 % bis 95 %, besonders bevorzugt im Bereich 7 % bis 15 %, größer ist als das erste Modul. Dabei bezeichnet das Modul vorzugsweise sich insbesondere periodisch wiederholendes Muster der Spur konstanter Größe, beispielsweise eine Verteilung gleich breiter und/oder gleichartiger Messinkremente. Beispielsweise können sich die erste Spur und die zweite Spur nach Art einer Nonius-Skala unterscheiden, wobei beispielsweise das erste Modul der ersten Spur zehn unterschiedliche, gleich große und gleichmäßig entlang einer Längeneinheit in der Haupterstreckungsrichtung verteilte erste Messinkremente und wobei das zweite Modul der zweiten Spur neun unterschiedliche, gleich große und gleichmäßig entlang derselben Längeneinheit in der Haupterstreckungsrichtung verteilte zweite Messinkremente aufweist. Bei dieser bevorzugten Ausführung kann insbesondere vorgesehen sein, dass die Sensiereinheiten und Spuren mit demselben Messprinzip arbeiten. Ein solche Messvorrichtung kann auf einfache Weise eine besonders hohe kombinierte Messauflösung erreichen. Insbesondere kann eine präzise Messauflösung für besonders lange Hubwege realisiert werden.

Bei einer bevorzugten Weiterbildung eines Position- und/oder Wegmesssystems weist die Stellstange wenigstens eine entlang der Haupterstreckungsrichtung ausgerichtete, kodierte dritte Spur auf. Vorzugsweise ist die dritte Spur zusätzlich zu der ersten Spur und zusätzlich zu der zweiten Spur vorgesehen. Zusätzlich trägt die Hülse wenigstens eine dritte Sensiereinheit, wobei die dritte Sensiereinheit zum vorzugsweise berührungsfreien Erfassen der dritten Spur ausgelegt und eingerichtet ist. Die dritte Spur und die dritte Sensiereinrichtung können gemäß demselben Messprinzip wie die zweite und/oder erste Spur-Sensiereinrichtung-Paarung wirken. Insbesondere definiert die dritte Spur ein drittes Modul, welches sich von dem ersten Modul und dem zweiten Modul unterscheidet. Vorzugsweise ist das kleinste gemeinsame Vielfache des dritten und des ersten Moduls ein ungerades Vielfaches des ersten und/oder des dritten Moduls. Alternativ oder zusätzlich ist das kleinste gemeinsame Vielfache des dritten und des zweiten Moduls ein ungerades Vielfaches des zweiten und/oder des dritten Moduls. Alternativ oder zusätzlich kann vorgesehen sein, dass das dritte Modul 2 % bis 50 %, insbesondere 3 % bis 30 %, vorzugsweise im Bereich 5 % bis 95 %, besonders bevorzugt im Bereich 7 % bis 15 %, größer ist als das zweite Modul. Überaschenderweise hat sich gezeigt, dass bei der Verwendung von genau drei Spur-Sensiereinheit-Paaren eine besonders hohe Präzision der Positions- und/oder Wegmessung über weite Hubwege bei sehr geringem Bauraum bereitgestellt werden kann. Bei einer weiteren Erhöhung der Spurenzahl insbesondere unter Verwendung desselben Messprinzips für die verschiedenen Spuren steigt nicht nur der erforderliche Bauraum sondern auch das Risiko fehlerhafter Messungen durch Wechselwirkungen der mehreren Sensiereinheiten.

Bei einer zweckmäßigen Ausführung eines Positions- und/oder Wegmesssystems, die mit den vorgenannten kombinierbar ist, ist die wenigstens eine Spur magnetisch kodiert, und die Sensiereinrichtung umfasst eine Magnetsensorik, insbesondere eine magnetoresistive Sensorik, wie eine GMR-Sensorik, AMR-Sensorik oder TMR Sensorik beispielsweise eine GLM-Sensorik. Insbesondere sind die mehreren Spuren magnetisch kodiert. Insbesondere umfassen die mehreren Sensiereinrichtungen je eine Magnetsensorik. Es hat sich insbesondere in Kombination mit einer Magnetsensorik als zweckmäßig erwiesen, die wenn die Ventilstange ein magnetisch leitendes Material (z.B. Edelstahl 1.4104 ) umfasst oder daraus besteht. Die Magnetsensorik hat insbesondere eine Periodenlänge (Pitch) von wenigstens 1 mm, insbesondere wenigstens 2 mm oder wenigstens 3 mm, vorzugsweise wenigstens 5 mm, besonders bevorzugt wenigstens 10 mm, wobei die Sensorik einen Hub, der kleiner oder gleich der Periodenlänge ist, absolut eindeutig bestimmen kann. Gattungsgemäße Stellventile haben oftmals einen Hubweg, der ein Vielfaches der Periodenlänge beträgt.

Alternativ oder zusätzlich ist bei einer Ausführung eines Positions- und/oder Wegmesssystems, die mit den vorigen kombinierbar ist, vorgesehen, dass die wenigstens eine Spur, insbesondere die mehreren Spuren, optisch kodiert ist und dass die Sensiereinrichtung eine optische Sensorik umfasst. Insbesondere umfassen die mehreren Sensiereinrichtungen je eine optische Sensorik. Alternativ kann eine kombinierte Sensiereinrichtung mit einer optischen Sensorik, wie einem CCD Sensor, in Funktionsunion zur Erfassung mehrerer Spuren vorgesehen sein.

Die wenigstens eine Spur, insbesondere die mehreren Spuren, sind vorzugsweise zumindest überwiegend oder vollständig in einer dem Stellantrieb zuzuwendenden oder dem Stellglied abzuwendenden oder abgewendeten Hälfte der Stellstange angeordnet.

Bei einer denkbaren Ausführung eines Positions- und/oder Wegmesssystems umfasst die wenigstens eine Spur eine Vielzahl von Vorsprüngen an der Stellstange. Die Spur kann beispielsweise als eine Zahnstruktur oder dergleichen realisiert sein, die an der Stellstange radial hervorsteht. Die Spur kann eine Vielzahl in der Haupterstreckungsrichtung vorzugsweise parallel nebeneinander angeordneter Vorsprünge umfassen, deren Vorsprungsausdehnung radial zur Haupterstreckungsrichtung der Stellstange orientiert ist. Die Vorsprünge können vorzugsweise ring- oder kreisförmig. Alternativ können die Vorsprünge ring- oder kreissegmentförmig sein. Die Vorsprünge können durch Form, Dicke oder Abstand eine Kodierung bereitstellen. Die Spur kann beispielsweise in Form derartiger Vorsprünge entlang der Stellstange einen Messbereich bedeckend angeordnet sein, welcher zumindest dem Hubweg des Stellventils entspricht. Es kann vorgesehen sein, dass sich die Spur betriebsgemäß weder in das Ventilgehäuse noch in den Stellantrieb hinein bewegt. Die Form, Größe, und der Abstand der Vorsprünge, insbesondere Querrillen, in der Haupterstreckungsrichtung, insbesondere der einheitliche Abstand (das Modul) der Vorsprünge in der Haupterstreckungsrichtung, ist vorzugsweise abgestimmt auf die damit kooperierende Sensiereinheit, insbesondere eine Periodenlänge der beispielsweise magnetischen Sensiereinheit.

Bei einer bevorzugten Ausführung eines Positions- und/oder Wegmesssystems umfasst die wenigstens eine Spur eine Vielzahl von Ausnehmungen in der Stellstange. Die Spur kann beispielsweise als eine Zahnstruktur oder dergleichen realisiert sein, die in die Stellstange eingebracht ist. Die Spur kann eine Vielzahl in der Haupterstreckungsrichtung vorzugsweise parallel nebeneinander angeordneter Querrillen umfassen, deren Rillenerstreckung quer, insbesondere senkrecht, zur Haupterstreckungsrichtung der Stellstange orientiert ist. Ausnehmungen können beispielsweise durch ein Spanhebendes Fertigungsverfahren, wie Drehen oder Fräsen, oder ein umformendes Fertigungsverfahren, wie ein Prägeverfahren oder ein Walzverfahren, hergestellt sein. Die Spur kann beispielsweise in Form derartiger Ausnehmungen entlang der Stellstange einen Messbereich bedeckend angeordnet sein, welcher zumindest dem Hubweg des Stellventils entspricht. Die Form, Größe, und der Abstand der Ausnehmungen, insbesondere Querrillen, in der Haupterstreckungsrichtung, insbesondere der einheitliche Abstand (das Modul) der Ausnehmungen in der Haupterstreckungsrichtung, ist vorzugsweise abgestimmt auf die damit kooperierende Sensiereinheit, insbesondere eine Periodenlänge der beispielsweise magnetischen Sensiereinheit.

Bei einer bevorzugten Weiterbildung einer Positions- und/oder Wegmesssystem, deren wenigstens eine Spur Ausnehmungen umfasst, sind die Ausnehmungen mit einem für die Sensiereinrichtung kontrastierenden und/oder transparenten Material gefüllt. Durch unterschiedliche, insbesondere magnetische, Eigenschaften der Materialien von Stellstange und Füllung, können die Spuren präzise ausgelesen werden. Gemäß einer bevorzugten Variante ist die Stellstange, in der die Ausnehmungen eingeformt sind, aus oder mit einem mit der Sensiereinrichtung interagierenden Material gebildet, von dem sich das Füllmaterial unterscheidet. Dabei kann vorzugsweise vorgesehen sein, dass das Füllmaterial für die Sensiereinrichtung transparent ist. Alternativ kann das Füllmaterial anders oder stärker mit der Sensiereinrichtung interagieren als das Material der Stellstange. Beispielsweise können Vertiefungen der Spuren mit nicht magnetisierbaren Materialien gefüllt sein, beispielsweise mittels Flammspritzen, Verchromen oder Umspritzen mit Kunststoff. Insbesondere in Kombination mit der Verwendung einer optischen Sensiereinheit können die Ausnehmungen zum Beispiel mittels optisch, insbesondere innerhalb eines bestimmten optischen Spektrums, transparenter Materialen, insbesondere einem transparenten Kunststoff, wie Epoxi oder Kunstharz, PC (Polycarbonate) oder PMMA (Plexiglas) gefüllt sein und/oder thermoplastisch umspritzt sein.

Gemäß einer zweckmäßigen Weiterbildung eines Positions- und/oder Wegmesssystems mit wenigstens einer Ausnehmungen umfassenden Spur weist die Stellstange im Bereich dieser Spur (Messbereich) eine glatte, vorzugsweise rotationssymmetrische, Umfangsoberfläche auf. Dabei ist die Umfangsoberfläche vorzugsweise von einer für die Sensiereinrichtung zumindest teilweise oder vollständig transparenten Beschichtung umgeben.

Beispielsweise kann eine Stellstange mit wenigstens einer Spur mit insbesondere verfüllten Ausnehmungen mit einer kreisrunden, glatten Umfangsoberfläche versehen sein. Optional sind bei einer solchen Welle die Spuren optisch nicht zu erkennen. Das Vorsehen einer glatten Umfangsoberfläche insbesondere durch Füllen und Glätten von Ausnehmungen hat den Vorteil, dass der Teil der Welle mit den Code-Spuren in das Stellventilgehäuse mit den Dichtpackungen bzw. in den Antrieb hineintauchen kann, ohne dass die Vertiefungen der Code-Spuren die Dichtungen am Gehäuse des Stellventils und/oder des Stellantrieb beeinträchtigen oder gar beschädigen. Die innere Länge eines Jochs zwischen Stellantrieb und Ventilgehäuse ist dann nicht notwendigerweise auf eine zu der zu messenden Hublänge korrespondierenden Mindestgröße festgelegt, sondern kann kleiner bemessen werden. Es können damit auch sehr kurze Jochlängen verwendet werden, um große Hübe mit hoher Präzision zu messen. Gleichzeitig bleibt der Vorteil vorhanden, dass sich der Hubsensor außerhalb des Prozessfluides am Joch zwischen dem Ventilgehäuse und dem Antrieb befinden kann.

Bei einer weiteren Ausführung eines Positions- und/oder Wegmesssystems, die mit den vorgenannten kombinierbar ist, weist die Messvorrichtung einen Montageflansch zum Befestigen der Messvorrichtung an dem Stellventil, insbesondere dem Joch, auf. Die Aussparung, insbesondere die Hülse mit der durch sie definierten Aussparung, ist drehbeweglich mit dem Montageflansch verbunden. Insbesondere ist die Aussparung, vorzugsweise die Hülse, mit einer Gleitlagerung mit dem Stellventil verbunden. Es kann vorgesehen sein, dass die Gleitlagerung einen Loszustand aufweist, in dem die Aussparung, vorzugweise die Hülse und/oder die wenigstens eine Sensiereinrichtung, in Bezug auf die Hubachse des Stellventils rotationsbeweglich und in Axial- und/oder Radialrichtung durch die Gleitlagerung ortsfest gehalten ist. Vorzugsweise ist das Positions- und/oder Wegmesssystem dazu ausgelegt und eingerichtet, dass in dem Loszustand die Messvorrichtung durch die Justiervorrichtung, insbesondere die Drehsicherung, in Bezug auf die Hubachse drehfest relativ zu der Stellstange ausgerichtet ist. In dem Loszustand kann mit einer Drehung der Stellstange bezüglich der Hubachse eine korrespondierende Drehung der Messvorrichtung bezüglich der Hubachse einhergehen, sodass die Stellstange mit minimalem Drehwinkelversatz oder ohne Drehwinkelversatz bezüglich der Messvorrichtung orientiert ist. Die Gleitlagerung kann einen Fixzustand aufweisen, in dem sie in Bezug auf die Hubachse rotationsstarr an dem Stellventil, insbesondere dem Joch und/oder dem Stellventilgehäuse, festgelegt ist. In dem Fixzustand kann die Justiervorrichtung, insbesondere die Drehsicherung, die Stellstange in eine bezüglich der Messvorrichtung orientierte Ausrichtung mit minimalem Drehwinkelversatz oder ohne Drehwinkelversatz drängen. Beispielsweise kann vorgesehen sein, dass zur Montage des Position- und/oder Wegmesssystems zunächst in dem Loszustand eine Vormontage erfolgt, wobei der die Messvorrichtung axial an dem Stellventil festgelegt während der die Justiervorrichtung die Orientierung der Stellstange zur Messvorrichtung einstellt. Falls die Justiervorrichtung mittels Magnetkraft wirkt, erfährt der Monteur dabei eine spürbare haptische Bestätigung der orientierten Ausrichtung der Stellstange mit der daran festgelegten wenigstens eine Spur relativ zur Messvorrichtung. Sodann kann bei einer Endmontage die Messvorrichtung rotatorisch und radial an dem Stellventil festgelegt werden, sodass vorzugsweise in der Radialrichtung ein definierter Ringspalt zwischen der Stellstange und der Messvorrichtung in der Aussparung verbleibt.

Die Erfindung betrifft auch ein Stellventil für eine Prozessfluidströmung einer prozesstechnischen Anlage, wie ein Kraftwerk, eine Chemieanlage, eine Lebensmittel verarbeitende Anlage oder dergleichen. Das erfindungsgemäße Stellventil umfasst ein wie oben beschrieben ausgeführtes Positions- und/oder Wegmesssystem. Insbesondere korrespondiert die Messachse der Messvorrichtung zur Hubachse des Stellventils. Vorzugsweise ist die Messachse parallel, besonders bevorzugt kollinear, zur Hubachse..

Ferner umfasst das Stellventil ein Ventilgehäuse mit einem darin angeordneten Stellglied, das von der Stellstange getragen ist und einen Stellaktor zum Betätigen der Stellstange.

Es kann bevorzugt sein, dass das Positions- und/oder Wegmesssystem derart auf das Ventilgehäuse abgestimmt ist, dass die wenigsten eine Spur stets außerhalb des Ventilgehäuses angeordnet ist. Die Spur kann vorzugsweise zumindest überwiegend oder vollständig in einer dem Stellantrieb zuzuwendenden oder zugewendeten Hälfte der Stellstange angeordnet sein. Vorzugsweise ist zu diesem Zweck das Stellventil dazu beabstandet von der wenigstens eine Spur an der Stellstange angeordnet ist. Insbesondere kann die Spur in einem Abstand zu dem Stellglied in oder an der Stellstange angeordnet, vorzugsweise ausgebildet, sein, der wenigstens so groß ist wie oder größer ist als der Hubweg. Zusätzlich kann optional vorgesehen sein, dass das Positions- und/oder Wegmesssystem derart auf den Stellaktor abgestimmt ist, dass die wenigsten eine Spur stets außerhalb des Stellaktors angeordnet ist. Für viele Prozessfluide sind durch die Bereiche der Stellstange, die in Kontakt mit dem Prozessfluid gelangen können, spezielle Anforderungen definiert. Für manche Prozessfluide kann es daher vorteilhaft sein, die Spur oder Spuren in einem bereich der Stellstange anzuordnen, die zu keinem Zeitpunkt in das Ventilgehäuse hinein bzw. durch dessen Stangendichtung hindurch bewegt wird.

Gemäß einer besonderen Ausführung ist das Positions- und/oder Wegmesssystem derart auf den Stellaktor abgestimmt ist, dass die wenigsten eine Spur in wenigstens einer Öffnungs- und/oder Schließstellung des Stellglieds innerhalb des Stellaktors angeordnet ist. Dabei kann der Stellaktor vorzugsweise als eine einfach- oder doppeltwirkender Hydraulik- oder, bevorzugt, Pneumatikaktor realisiert sein.

Bei einer bevorzugten Weiterbildung des Stellventils ragt die wenigstens eine Spur vorzugsweise stets in den Stellaktor hinein und die Messvorrichtung ist innerhalb des Stellaktors angeordnet ist. Dabei kann der Stellaktor vorzugsweise als eine einfach- oder doppeltwirkender Hydraulik- oder, bevorzugt, Pneumatikaktor realisiert sein. Bei einem Pneumatik- oder Hydraulikaktor ist die wenigstens eine hydraulische oder pneumatische Arbeitskammer von der anderen Aktorkammer, die eine Rückstellfeder enthalten und/oder als zweite hydraulische oder pneumatische Arbeitskammer ausgebildet sein kann, durch eine Membran oder anderes Trennglied pneumatisch und/oder hydraulisch getrennt. Die Messvorrichtung ist in dem Stellaktor in Bezug auf das Trennglied und/oder die Rückstellfeder kollisionsfrei, d.h. außerhalb des Arbeitsbereichs des Trennglieds und/oder der Rückstellfeder, angeordnet. Auf diese weise wird verhindert, dass beispielsweise die Membran oder Feder in einem beispielsweise geschlossenen Zustand des Stellventils gegen die Messvorrichtung fährt.

Bei einer bevorzugten Ausführung umfasst das Stellventil ferner ein Joch, das den Stellaktor am Ventilgehäuse befestigt ist und in dem die Stellstange linearbeweglich aufgenommen ist. Optional kann vorgesehen sein, dass die Stellstange entlang eines linearen Hubwegs beweglich ist, der größer ist, als die Höhe des Jochs zwischen dem Ventilgehäuse und dem Stellaktor. Beispielsweise kann der Hubweg eine lineare Länge von wenigstens 5 mm, insbesondere wenigstens 10 mm oder wenigstens 50 mm aufweisen. Die Länge des Hubwegs liegt insbesondere zwischen 5 mm und 500 mm, vorzugsweise zwischen 7,5 mm und 120 mm. Der Hubweg ist vorzugsweise größer als die eindeutig auflösbare Periodenlänge der wenigstens einen Sensiereinrichtung, insbesondere wenigstens doppelt so groß, vorzugsweise wenigstens fünf mal so groß, besonders bevorzugt wenigstens zehn mal so groß.

Das Joch und der Stellaktor und/oder das Ventilgehäuse sind vorzugsweise in Bezug auf den Hubweg und die Stellstange derart dimensioniert, dass entlang des Hubwegs ein eintauchen der Spur an der Stellstange in den Stellaktor oder in das Ventilgehäuse oder sowohl in den Stellaktor als auch in das Ventilgehäuse erfolgt.

### Prozessfluid

Das Prozessfluid bezeichnet im Allgemeinen ein in der prozesstechnischen Anlage zu prozessierendes Fluid. Das Prozessfluid kann in der prozesstechnischen Anlage zumindest abschnittsweise gasförmig, flüssig oder ein Mehrphasengemisch sein. Insbesondere kann das Prozessfluid Wasser sein oder umfassen. Das Prozessfluid kann ein zumindest näherungsweise newtonsches Fluid sein. Alternativ kann das Prozessfluid ein nichtnewtonsches, beispielsweise rheopexes oder thixotropes, Fluid sein.

### Prozessfluidströmung

Die Prozessfluidströmung bezeichnet den in zumindest abschnittsweisen Durchfluss des Prozessfluids in der prozesstechnischen Anlage. Eine Prozessfluidströmung kann zumindest lokal, an einer Stelle der prozesstechnischen Anlage, insbesondere an einem Stellventil, anhand ihrer fluiddynamischen Strömungseigenschaften, wie eine Durchflussmenge oder ein Durchflussvolumen, eine Prozessfluid-Temperatur, einen Prozessfluiddruck oder dergleichen, charakterisierbar sein.

### Stellventil

Ein Stellventil bezeichnet im Allgemeinen eine Armatur einer prozesstechnischen Anlage zum Einstellen einer Prozessfluidströmung der prozesstechnischen Anlage. Beispielsweise kann ein Stellventil als auf/zu-Ventil realisiert sein, dass eine vordefinierte zu-Stellung und eine vordefinierte auf-Stellung aufweist, zwischen denen das auf/zu-Ventil betriebsgemäß wechseln kann. Alternativ oder zusätzlich kann das Stellventil dazu ausgelegt und eingerichtet sein, Strömungseigenschaften der Prozessfluidströmung innerhalb eines vordefinierten Stellbereichs einzustellen. Beispielsweise kann das Stellventil dazu ausgelegt und eingerichtet sein, eine Strömungseigenschaft, wie eine Durchflussmenge oder ein Durchflussvolumen durch das Stellventil, eine Prozessfluid-Temperatur stromaufwärts und/oder stromabwärts des Stellventils, einen Prozessfluiddruck stromaufwärts und/oder stromabwärts des Stellventils, eine Prozessfluid-Druckdifferenz an dem Stellventil oder dergleichen, einzustellen. Insbesondere kann das Stellventil dazu ausgelegt und eingerichtet sein, eine Strömungseigenschaft der Prozessfluidströmung innerhalb eines vordefinierten Stellbereichs stufenlos oder diskret einzustellen. Ein Stellventil umfasst im Allgemeinen ein Stellventilgehäuse, ein Stellglied, einen Stellaktor und eine Steuerungs- und/oder Regelungselektronik. Das Stellventilgehäuse weist wenigstens einen Eingang für das Prozessfluid und wenigstens einen Ausgang für das Prozessfluid sowie einen Durchgang mit einem mittels des Stellglieds einstellbaren Öffnungsquerschnitt zwischen dem Eingang und dem Ausgang auf. Der Stellaktor des Stellventils ist dazu ausgelegt und eingerichtet, das Stellglied des Stellventils innerhalb des Stellventilgehäuses relativ zu dem Durchgang zu positionieren, um durch die Relativstellung des Stellglieds relativ zu dem Durchgang wenigstens eine Strömungseigenschaft einzustellen. Beispielsweise kann der Stellaktor dazu ausgelegt sein, das Stellglied in eine den Durchgang verschließende zu-Stellung zu drängen, das Stellglied in eine den Durchgang vollständig freigebende auf-Stellung zu drängen und/oder das Stellglied zu veranlassen, eine Zwischenstellung einer Vielzahl von Zwischenstellungen mit verschiedenen, definierten Öffnungsquerschnitten zwischen dem Stellglied und dem Durchgang einzunehmen. Der Stellaktor kann beispielsweise als ein, insbesondere einfach- oder doppelt-wirkender, pneumatischer Stellantrieb, hydraulischer Stellantrieb und/oder elektromagnetischer Stellantrieb, insbesondere mit oder ohne Federrückstellung, realisiert sein. Der Stellantrieb ist mit dem Stellglied vorzugsweise mechanisch mittels einer Stellstange verbunden. Die Steuerungs- und/oder Regelungselektronik des Stellventils ist dazu ausgelegt und eingerichtet, den Stellaktor zu betätigen, um eine gewünschte Einwirkung des Stellventils auf eine Strömungseigenschaft der Prozessfluidströmung zu bewirken. Die Steuerungs- und/oder Regelungselektronik kann wenigstens eine Sollwert-Vorgabe und/oder wenigstens eine Istwert-Vorgabe bezüglich wenigstens einer Strömungseigenschaft der Prozessfluidströmung berücksichtigen, um ein Betätigungssignal an den Stellaktor bereitzustellen. Das Stellventil ist vorzugsweise ausgelegt und eingerichtet für eine Prozessfluidströmung, insbesondere eine Wasserströmung, von bis zu wenigstens 1 L/h, wobei dies die Strömungsrate der Prozessfluidströmung durch das Stellventil bei vollständig geöffnetem Stellventil bezeichnet, also in der auf-Stellung des Stellventils. Insbesondere ist das Stellventil ausgelegt und eingerichtet für eine Prozessfluidströmung bis zu wenigstens 5 L/h, bis zu wenigstens 10 L/h, bis zu wenigstens 50 L/h, bis zu wenigstens 100 L/h, bis zu wenigstens 500 L/h oder bis zu wenigstens 1.000 L/h. Es sei klar, dass dies die Prozessfluidströmung unter nominellen Betriebsbedingungen meint. In einer Zwischenstellung des Stellventils kann eine entsprechend geringere Prozessfluidströmung einstellbar sein. In einer zu-Stellung kann die Prozessfluidströmung Null oder nahezu null sein. In der zu-Stellung lässt das Stellventil Prozessfluidströmung vom Eingang zum Ausgang zu.

### Stellglied (Hubkolben)

Ein Stellglied bezeichnet im Allgemeinen eine Komponente des Stellventils, die relativ zu dem Stellventilgehäuse, insbesondere einem Durchgang, in dem Stellventil beweglich ist. Mithilfe des Stellglieds kann die Prozessfluidströmung einstellbar sein. Stellglieder können beispielsweise dazu ausgelegt und eingerichtet sein, innerhalb eines Stellventilgehäuses wenigstens zwei verschiedene Relativstellungen einzunehmen, um wenigstens zwei verschiedene Prozessfluidströmungen einzustellen, insbesondere wenigstens eine auf-Stellung, in der das Stellglied einen insbesondere maximalen Prozessfluid-Durchfluss durch das Stellventil zulässt, und wenigstens eine zu-Stellung oder Schließstellung, in der das Stellglied keinen Prozessfluid-Durchfluss, nahezu keinen Prozessfluid-Durchfluss oder einen vorbestimmten minimalen Prozessfluid-Durchfluss durch das Stellventil zulässt. Das Stellglied kann dazu ausgelegt und eingerichtet sein, eine Vielzahl von Relativstellungen bezüglich des Stellventilgehäuses einzunehmen, um eine entsprechende Vielzahl unterschiedlicher Prozessfluid-Durchflüsse einzustellen. Die verschiedenen Relativstellungen mit Prozessfluid-Durchflüssen und die auf-Stellung können als Durchflussstellungen bezeichnet sein. Bei einem als Hubventil ausgestalteten Stellventil kann das Stellventilglied beispielsweise kegelförmig oder als Hubkolben realisiert sein. Ein Hubkolben umfasst im Allgemeinen einen zylindrische Kolbenkörper und eine Stellstange, die lösbar oder unlösbar mit dem Körper verbunden ist. Der Kolbenkörper des Stellglieds kann eine bezüglich einer Stellachse rotationssymmetrische oder spiegelsymmetrische Gestalt aufweisen. Der Kolbenkörper und die Stellstange sind vorzugsweise konzentrisch, insbesondere koaxial zueinander, wobei vorzugsweise die Haupterstreckungsrichtung der Stellstange zu der translatorischen Stellrichtung des Ventilglieds korrespondiert, die auch als Hubrichtung bezeichnet sein kann. Der Kolbenkörper kann einen kegelförmigen Querschnitt aufweisen. Vorzugsweise weist ein Kolbenkörper an der zu der Stellstange gegenüberliegenden Seite eine kegelstumpfförmige oder kegelförmige Verjüngung auf, wobei insbesondere die Verjüngung eine Gegendichtfläche definiert. Der Kolbenkörper kann einen U-förmigen oder H-förmigen Querschnitt aufweisen. Hubkolben mit U-förmigen oder H-förmigen Querschnitt können dazu ausgelegt und eingerichtet sein, mit einem korrespondierenden, insbesondere formkomplementären hohlzylindrischen Ventilkäfig zusammen zu wirken. Kegelförmige, teilsphärenförmige oder ähnliche Kolbenkörper können dazu ausgelegt und eingerichtet sein, mit einem korrespondierenden, insbesondere formkomplementären ringförmigen, vorzugsweise kreisringförmigen, Ventilsitz am Durchgang des Stellventilgehäuses zusammen wirken.

Weitere Eigenschaften, Vorteile und Merkmale der Erfindung werden durch die folgende Beschreibung von bevorzugten Ausführungen der Erfindung anhand der beiliegenden Zeichnungen deutlich, in denen zeigen:
- Figur 1: eine Schnittdarstellung eines erfindungsgemäßen Stellventils mit erfindungsgemäßem Weg- und/oder Positionsmesssystem;
- Figur 2: eine andere Schnittansicht des Stellventils mit dem Messsystem gemäß Figur 1;
- Figur 3: eine Schnittansicht eines erfindungsgemäßen Weg- und/oder Positionsmesssystems;
- Figur 4: eine perspektivische Darstellung einer Stellstange für ein erfindungsgemäßes Messsystem;
- Figur 5: eine perspektivische Darstellung einer Hülse für ein erfindungsgemäßes Messsystem; und
- Figur 6: eine andere perspektivische Darstellung der Stellstange nach Figur 4.

In der nachfolgenden Beschreibung bevorzugter Ausführungen anhand der Figuren werden für dieselben oder ähnliche Komponenten verschiedener Ausführungen dieselben oder ähnliche Bezugszeichen verwendet.

Ein erfindungsgemäßes Weg- und/oder Positionsmesssystem (kurz: Messsystem) wird im Allgemeinen mit dem Bezugszeichen 1 bezeichnet. Ein erfindungsgemäßes Stellventil wird im Allgemeinen mit dem Bezugszeichen 100 gekennzeichnet.

Zur Vereinfachung der Lesbarkeit wird in der Beschreibung bevorzugter Ausführungen der Erfindung nachfolgend ein magnetisches Messsystem mit magnetoresistiven Sensiereinrichtung, die exemplarisch als GLM-Sensorik realisiert sind, beschrieben. Der Fachmann versteht, dass im Rahmen der Erfindung auch andere Messprinzipien vorgesehen sein können, beispielsweise optische Messprinzipien.

In der nachfolgenden Beschreibung bevorzugter Ausführungen anhand der Figuren sind nur solche Stellventile dargestellt, deren Ventilglied 120 kegelstumpfförmig ist. Es sei klar, dass eine erfindungsgemäße Analyseanordnung alternativ ein andersartiges Stellglied aufweisen kann (nicht näher dargestellt).

Die betriebsgemäße Strömungsrichtung eines Prozessfluids in dem nachfolgend dargestellten Stellventil 100 der verschiedenen Ausführungen unterschiedlicher Analyseanordnungen kann wahlweise bezugnehmend auf die Darstellung von »rechts« nach »links« (Flow-to-Close; kurz: FTC) oder alternativ von »links« nach »rechts« (Flow-to-Open; kurz: FTO) eingestellt sein. Ein Stellventil kann spezifisch für die Strömungsrichtung Flow-to-Open und/oder die Strömungsrichtung Flow-to-Close ausgelegt und eingerichtet sein. Im Sinne der einfachen Lesbarkeit der Anmeldung wird im Folgenden exemplarisch die Strömungsrichtung Flow-to-Open, von »links« nach »rechts« angenommen und in diesem Sinne auf die Strömungsrichtung bezogene Begriffe wie »Eingang« und »Ausgang« des Stellventils verwendet.

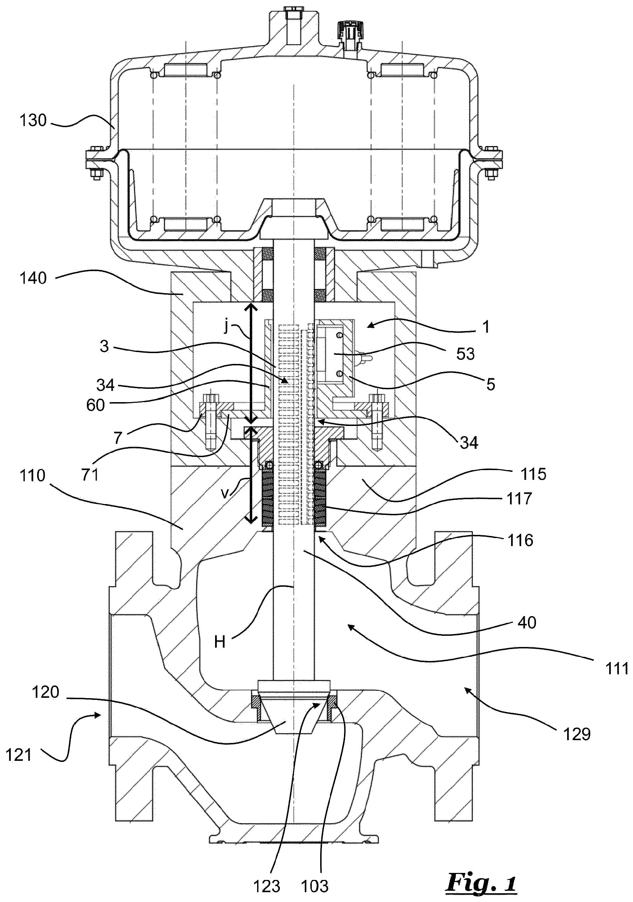

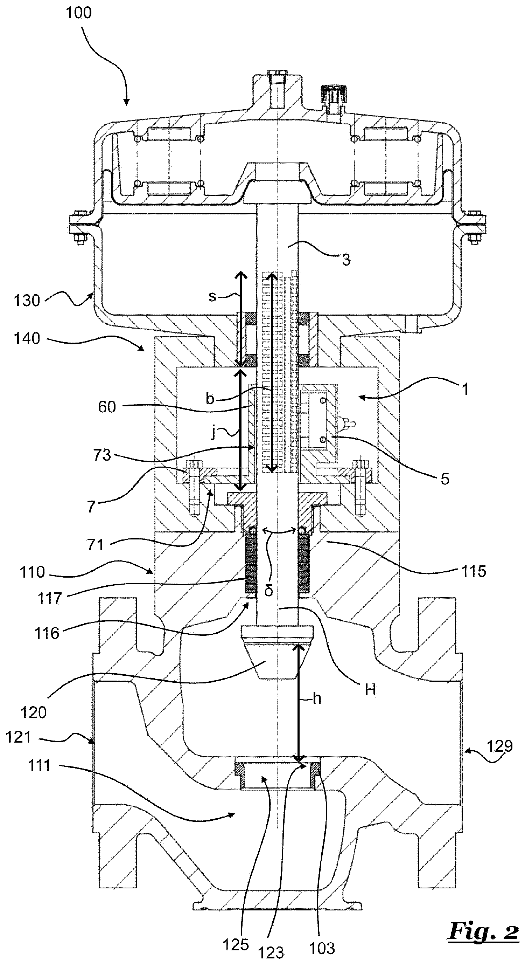

Die Figuren 1 und 2 zeigen eine exemplarische Ausführung eines Stellventils 100 mit Positions- und/oder Wegmesssystem 1. Das Stellventil 100 weist einen Hubkolben 120 auf, der im Stellventilgehäuse 110 entsprechend einer Hubachse H translatorische beweglich ist. Zur Vereinfachung der Lesbarkeit ist in den Figuren die Hubachse H des Stellventils 100 korrespondierend zu der Haupterstreckungsrichtung der Stellstange 3 und der Messachse der Messvorrichtung5 abgebildet. In den Abbildungen ist die Stellstange 3 in Bezug auf die Messvorrichtung 5 ideal kollinear, ohne Kipp-, Neige- und/oder Drehwinkelversatz, dargestellt.

An dem Deckelabschnitt 115 des Stellventilgehäuses ist indirekt, mittels eines Jochs 140, das beispielsweise als offene oder geschlossene Laterne ausgeführt sein kann, der Stellantrieb 130, beispielsweise ein pneumatischer Stellaktor, des Stellventils 100 befestigt. Der Stellaktor 130 ist mit dem Hubkolben 120 mittels der Stellstange 3 verbunden, um den Hubkolben 120 in eine Betriebsstellung zu bewegen, in einer Betriebsstellung zu halten und/oder um dem Hubkolben 120 eine Stellbetätigung mitzuteilen. Die Betriebsstellung des Stellglieds 120 kann entlang des Hubweges h eingestellt werden. Der Stellaktor 130 ist mit einer Steuerungs- und/oder Regelungselektronik (nicht abgebildet) signalübertragungsgemäß verbunden. Die Steuerungselektronik ist dazu ausgelegt und eingerichtet, dem Stellaktor 130 ein Steuersignal bereitzustellen, um den Stellaktor 130 zu veranlassen, dem Hubkolben 120 eine bestimmte Stellbetätigung mitzuteilen, Stellbewegung aufzuprägen und/oder Stellkraft bereitzustellen. Das Positions- und/oder Wegmesssystem 1 ist mit der Regelungselektronik signalübertragungsgemäß verbunden. Das Messsystem stellt der Regelungselektronik einen Ist-Positions- und/oder Wegmesswert bereit.

Im Inneren 111 des Stellventilgehäuses 110 kann ein Prozessfluid bei einer geöffneten Stellung, wie beispielsweise der auf-Stellung gemäß Figur 2, von dem Eingang 121 durch den Durchgang 125 zum Ausgang 129 fließen. Das Prozessfluid führende Innere 111 des Stellventilgehäuses 110 ist am Eingang 121 bzw. Ausgang 129 des Stellventils 100 durch eine jeweilige Gehäusekanalwand begrenzt. Die Stellstange 3 ist aus dem Inneren 111 des Ventilgehäuses 110 durch eine Austrittsöffnung 116 hinaus geführt. Im Bereich der Austrittsöffnung 116 ist eine Dichtpackung 117 vorgesehen, welche die Stellstange 3 vollumfänglich umgibt und gemeinsam mit der Stellstange 3 die Austrittsöffnung 116 verschließt. In der zu-Stellung gemäß Figur 1 kooperiert eine Dichtfläche 123 des Ventilgehäuses 101 mit einer Gegendichtfläche des Stellkolbens 130, um das Stellventil 100 an dem Durchgang 125 prozessfluiddicht zu verschließen. Die Dichtfläche 123 ist bei der abgebildeten Ausführung an einem Ventilsitz 103 ausgebildet. Der Ventilsitz 103 bildet einen Teil des Ventilgehäuses 110.

Mithilfe des Stellventils 100 kann die Prozessfluidströmung beispielsweise abhängig von einer Öffnungsweite zwischen dem Stellkolben 120 und Ventilsitz 103 einstellbar sein. In der auf-Stellung beträgt die maximale Durchflussrate von Prozessfluid durch das Stellventil 100 im Allgemeinen wenigstens 1 L/h. Die maximale Durchflussrate des Stellventils 100 kann definiert sein durch die betriebsgemäßem Strömungseigenschaften, beispielsweise den Druck, die Viskosität, die Temperatur, etc., der Prozessfluidströmung am Eingang 121 und/oder am Ausgang 129, die Geometrie des Stellventilgehäuses 110 und die Öffnungsweite in der auf-Stellung. In der zu-Stellung beträgt der Durchfluss von Prozessfluid durch das Stellventil 100 im Allgemeinen 0 L/h oder nahezu 0 L/h. Das Stellventil 100 ist dazu ausgelegt und eingerichtet, eine oder mehrere Zwischenstellungen entlang des Hubweges h einzunehmen, und eine Prozessfluidströmung unterhalb der maximalen Durchflussrate einzustellen. Zu diesem Zweck kann die Steuerungs- und/oder Regelungselektronik vorgesehen sein.

Der Messbereich b des Position- und/oder Wegmesssystems 1 entspricht wenigstens der Länge des Hubwegs h, damit entlang des gesamten Hubwegs h eine Position- und/oder Wegmessung mittels des Messsystems 1 erfolgen kann. Wie anhand der Figuren 1 und 2 zu erkennen, ist der einstellbare Hubweg h des Stellventils 100 größer als die lichte Jochweite j. Der Messbereich b entspricht der axialen Länge des mit der wenigstens einen kodierten Spur 33, 34 bedeckten Bereichs der Stellstange 3. In den in Figur 1 und 2 abgebildeten Endlagen des Stellglieds 120 taucht der durch die Spuren 33, 34 an der Stellstange 3 festgelegte Messbereich b in das Volumen des Stellventilgehäuses 110 oder des Stellantriebs 130 ein. In einer nicht näher dargestellten Zwischenstellung des Stellglieds 120 dehnt sich der Messbereich b vollständig über die lichte Jochweite j hinaus sowohl einerseits in das Volumen des Stellantriebs 130 als auch andererseits in das Volumen des Stellventilgehäuse 110 aus. Der Teil des Messbereichs b, welcher sich innerhalb des Stellantriebs 130 befindet, kann als stellantriebsseitige Eintauchtiefe s bezeichnet sein. Der Teil des Messbereichs b, welcher sich innerhalb des Stellventilgehäuse 110 befindet, kann als ventilseitige Eintauchtiefe v bezeichnet sein.

Die Messvorrichtung 5 ist an dem Joch 140 und damit an dem Stellventil 100 mittels eines Montageflanschs 7 befestigt. Durch den Montageflansch 7 ist die Messvorrichtung 1 in einer zur Hubachse H und Haupterstreckungsrichtung korrespondierenden Axialrichtung ortsfest gehalten.

Ein Gleitlager 71 kann in einem Loszustand eine Drehung der Messvorrichtung 5 um die Hubachse H zulassen, um eine vorbestimmte Orientierung der Stellstange 3 in Bezug auf die Messvorrichtung 5 mit minimalem Drehwinkelversatz oder frei von einem Drehwinkelversatz einfach zu ermöglichen. Mit dem Montageflansch 7 kann zusätzlich oder alternativ ein radialer Ringspalt 73 zwischen der Stellstange 3 und der Messvorrichtung 5 einstellbar sein. Durch das Vorsehen des Ringspalts 73 ist die Stellstange 3 in Bezug auf die Messvorrichtung 5 berührungslos gehalten und geführt. Der Ringspalt 73 erstreckt sich vorzugsweise vollumfänglich um die Stellstange 3.

Zur Montage wird die Messvorrichtung 5 vor einer eventuellen Fixierung mittels des Montageflanschs 7 entsprechend der Spuren 33, 34 ausgerichtet. Dabei werden die mit den Sensiereinrichtungen 53, 54 auf die Spuren 33, 34 zu weisend positioniert. Dies kann beispielsweise mithilfe einer Richtstruktur an der Stellstange, wie einer Längsvertiefung, und einer Justiereinrichtung in Form einer zu der Längsvertiefung formkomplementären Erhöhung an der Messvorrichtung 5 erfolgen. Alternativ können wie abgebildet die Richtstruktur 31 und der Dauermagnet 51 verwendet werden. Nach erfolgter Justage der Wegmessvorrichtung 5 kann das Wegmesssystem mittels des Montageflanschs 7 an dem Stellventil fixiert werden. Insbesondere falls die Stellstange 3 gegen Verdrehen gesichert ist, kann die Messvorrichtung 5 mittels des Montageflanschs 7 drehfest mit dem Joch verbunden werden. Falls die Messeinrichtung 5 eine (nicht näher dargestellte) Verdrehsicherung beispielsweise in Form einer Nut-Feder-Verbindung, insbesondere zwischen der Messvorrichtung 5 und der Stellstange 3, aufweist, kann es zweckmäßig sein, die Verdrehsicherung mit Spiel auszugestalten, um ein Verklemmen zu vermeiden. Bei nicht in Relation zum Ventilgehäuse drehgesicherten Stellstangen 3 kann vorgesehen sein, dass die Messvorrichtung 5 bezüglich der Hubachse H drehbeweglich am Ventilgehäuse gehalten ist und dazu eingerichtet ist, sich einer Drehbewegung der Stellstange 3 anzupassen, um eine möglichst genaue Ausrichtung der Sensiereinrichtungen 53, 54 relativ zu den Spuren 33, 34 bei zu behalten. Die Messvorrichtung 5 kann mittels einer Drehsicherung, beispielsweise der vorgenannten Längsvertiefung in der Stellstange 3 mit darin formkomplementär eingreifender Nase der Messvorrichtung 5, oder einer Justiereinrichtung, wie den abgebildeten, auf einander abgestimmten Dauermagneten 51 und der Richtstruktur 31, relativ zur Stellstange drehfest gehalten sein.

Gemäß einer (nicht im Detail dargestellten) alternativen Ausführung ist es denkbar, dass die Spur 33 oder Spuren 33, 34 anders als in Figur 1 dargestellt, nie in das Innere des Ventilgehäuses 110, vorzugsweise einschließlich des mit der Dichtpackung 117 belegten Bereichs, eindringt.

Alternativ oder zusätzlich kann gemäß einer (nicht im Detail dargestellten) Ausführung die Messvorrichtung innerhalb des vorzugsweise pneumatischen Stellaktors 130 angeordnet sein. Bezugnehmend auf Figur 2 könnte die Messvorrichtung innerhalb der ventilgehäusenahen Kammer untergebracht sein, beispielsweise wie in den Figuren 1 oder 2 dargestellt in der Pneumatikkammer des Stellantriebs 130. Der Stellantrieb ist dabei vorzugsweise, beispielsweise durch einen Anschlag, derart ausgestaltet, dass das Trennglied zwischen den Aktorkammern sowie gegebenenfalls die Rückstellfedern nicht mit der stellantriebsinternen Messvorrichtung kollidiert. Eine solche Ausführung kann mit Blick auf die Kompaktheit des Stellventils optimiert sein.

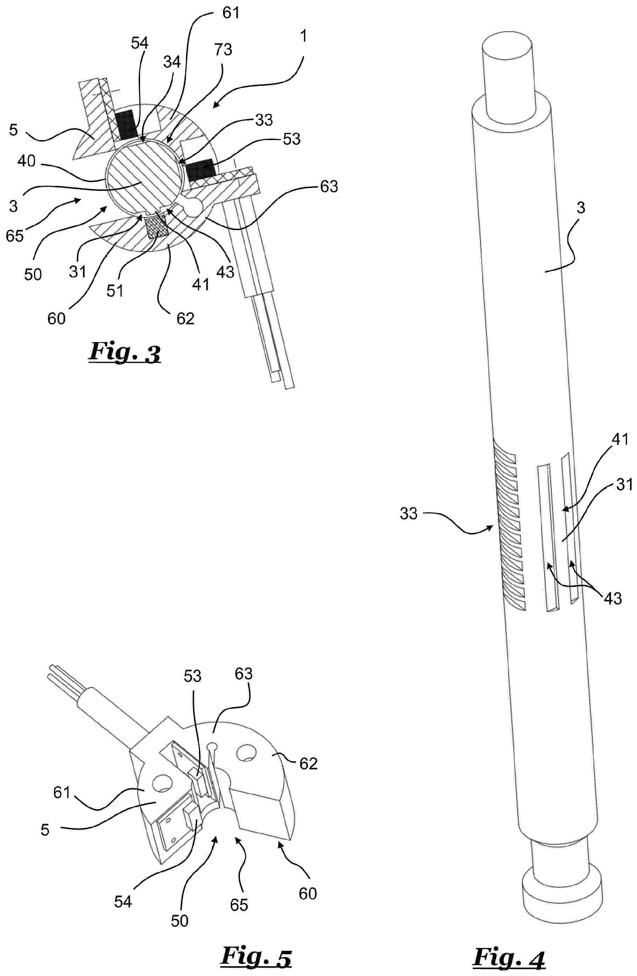

Figur 3 zeigt eine Querschnittsansicht einer Ausführung des erfindungsgemäßen Position- und/oder Messsystems 1 mit zwei kodierten Spuren 33, 34. Die Figuren 4 und 5 zeigen die einzelnen Komponenten Stellstange 3 und Messvorrichtung 5 des in Figur 3 abgebildeten Messsystems 1. Dem Fachmann ist klar, dass ein Messsystem 1 alternativ zu der abgebildeten Variante lediglich eine Spur, drei Spuren oder mehr Spuren aufweisen kann. Die Anzahl der Sensiereinrichtung 53, 54 korrespondiert zur Anzahl der Spuren 33, 34. Vorzugsweise ist die Anzahl der Sensiereinrichtung 53, 54 wie abgebildet gleich groß der Anzahl der Spuren 33, 34. Alternativ kann bei einem nicht näher dargestellten beispielsweise optischen Messsystem eine einzelne Sensiereinrichtung für mehrere Spuren vorgesehen sein. Es ist denkbar, das mehrere, insbesondere magnetische, Sensiereinrichtungen in der Haupterstreckungsrichtung versetzt zu einander angeordnet sind. Alternativ oder zusätzlich ist es denkbar, das mehrere Spuren an der Stellstange 3 in der Haupterstreckungsrichtung versetzt, beispielsweise fluchtend hinter einander, angeordnet sind, wobei insbesondere diese mehreren Spuren unterschiedliche Module, insbesondere unterschiedliche Module bzw. Periode aufweisen. Beispielsweise kann eine obere Spur eine größere Periode aufweisen als eine untere Spur.

Die Stellstange 3 hat eine Richtstruktur 31 zum Orientieren der Stellstange 3 relativ zu der Messvorrichtung 5. Bei der in Figur 4 dargestellten exemplarischen Ausführung ist die Richtstruktur 31 wie auch die Spur 33 einstückig mit der Stellstange 3 realisiert. Die Richtstruktur 31 ist gebildet durch eine Rippe 41, die sich korrespondierend zur Haupterstreckungsrichtung der Stellstange 3 erstreckt. In Umfangsrichtung der Stellstange 3 ist die Rippe 41 beidseitig durch eine radiale Vertiefung 43 begrenzt.

Die Messvorrichtung 5 umfasst einen Dauermagneten 51, der dazu ausgelegt und eingerichtet ist, mit der Richtstruktur 31 zu kooperieren, um die Stellstange 3 relativ zur Messvorrichtung 5 zu orientieren. Bei der hier abgebildeten Ausführung wird eine Justiereinrichtung durch die Richtstruktur 31 und den Dauermagneten 51 realisiert, mittels welcher die Stellstange 3 frei von einem Drehwinkelversatz relativ zu der Messvorrichtung 5 in Bezug auf die Messachse eingestellt ist. Die Justiereinrichtung kann zusätzlich oder alternativ, beispielsweise mittels eines zweiten in der Axialrichtung versetzten Dauermagneten 51, dazu ausgestaltet sein, die Stellstange 3 frei von einem Kipp- und/oder Neigewinkel in Bezug auf die Messvorrichtung 5 zu orientieren. Die Kerben 43 und die Rippe 41 erstrecken sich vorzugsweise entlang der Haupterstreckungsrichtung der Stellstange 31 zumindest über einen Großteil des Messbereichs b. Die Richtstruktur 31 ist raumparallel zur ersten Spur 33 und/oder zur zweiten Spur 34 an der Stellstange 3 angeformt. Wie die übrige Stellstange 3 besteht die Richtstruktur 31 aus einem mit den Sensiereinrichtung 53, 54 interagierenden, beispielsweise magnetischen oder magnetisierbaren, Material, auf welche der Richtmagnet 51 mit einer magnetischen Anziehungskraft wirkt. Die magnetische Anziehungskraft oder Richtkraft, welche der Richtmagnet 51 bereitstellt, wirkt besonders stark auf die konvexe Rippe 41 und besonders schwach im Bereich der konkaven Kerben 43. Beim Montieren des Messsystems 1 erfolgt ein sprungartiges Einrasten der Stellstange 3 relativ zu der Messvorrichtung 5 in der vorbestimmten Orientierung. Da der Richtmagnet 51 besonders stark auf die Rippe 51 und besonders schwach auf die die Rippe 51 umgebenden Kerben 43 wirkt, verhindert die Justiereinrichtung, dass die Stellstange die vorgegebene Orientierung im Betrieb des Stellventils 100 beispielsweise infolge rotatorische Kräfte auf das Ventilglied 120 verlässt.

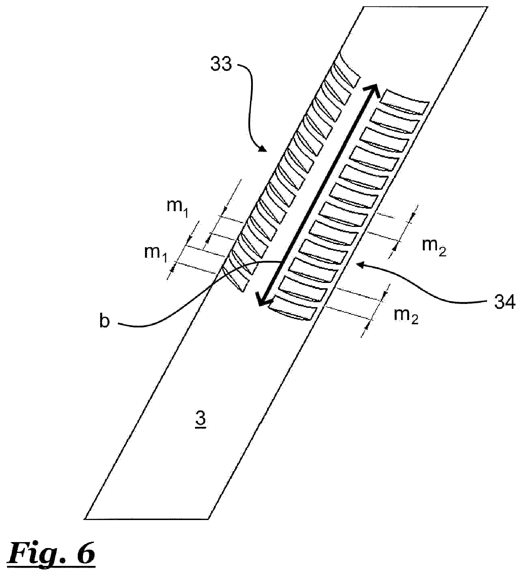

Wie in Figur 3 dargestellt, ist die Stellstange 3 von einer Beschichtung 40 umgeben, welche die zylindermantelförmige Umfangsfläche bildet. Die Umfangsfläche beschreibt einen kreisförmigen Querschnitt. Vorzugsweise ist die Umfangsfläche glatt. Besonders bevorzugt ist die Umfangsfläche dergestalt glatt, dass die Oberflächengenauigkeit im Wesentlichen der Oberflächengenauigkeit einer konventionellen Stellstange ohne Spuren entspricht und/oder dass eine sichere und leckagefreie Abdichtung im Bereich der Austrittsöffnung 116 des Ventilgehäuses 110 beispielsweise mittels einer Dichtpackung 117, realisierbar ist. Die Beschichtung 40 ist aus einem für die Sensiereinrichtung 53, 54 transparenten, beispielsweise nicht magnetisierbaren, Material, beispielsweise einem Kunststoffmaterial gebildet. Wie in den Figuren 1 und 2 durch Strichlieren der Spuren 33, 34 und der Richtstruktur 31 angedeutet, kann die Beschichtung 40 aus einem optisch intransparenten Material bestehen, sodass die magnetisch kodierten Spuren 33, 34 und die Richtstruktur 31 nicht optisch in Erscheinung treten. In den Figuren 4 und 6 ist die Beschichtung nicht abgebildet. Die Beschichtung kann in Funktionsunion eine Füllung der Ausnehmungen realisieren. Alternativ kann vorgesehen sein, dass nur Ausnehmungen und/oder Kerben der Stellstange 3 mit einem Füllmaterial befüllt sind (nicht näher dargestellt). Das Füllmaterial kann für die Sensiereinrichtung transparent oder kontrastierend sein. Beispielsweise kann. Bei einer Ausführung mit einem Füllmaterial, das sich vom Material der Stellstange unterscheidet, sowie vom Material einer eventuell vorhandenen sensortransparenten Beschichtung oder anderen Ummantelung, kann vorgesehen sein, dass das Füllmaterial und die Stellstange kontrastierend für die Sensiereinrichtung sind, wobei beispielsweise die Stellstange nicht-magnetisierbar und das Füllmaterial magnetisch oder magnetisierbar sein kann.

In Figur 5 ist die Messvorrichtung 5 ohne Stellstange 3 abgebildet. Die Messvorrichtung 5 hat eine Aussparung 50 zum Aufnehmen der Stellstange 3. Vorzugsweise ist die Aussparung 50 korrespondierend, insbesondere formkomplementär zum Querschnitt der Stellstange 3 geformt. Insbesondere sind die Aussparung 50 und die Stellstange 3 derart aufeinander abgestimmt, dass die Stellstange 3 unter Ausbildung eines schmalen Ringspaltes 73 relativ zur Hülse 60 in der Aufnahme 50 der Messvorrichtung 5 angeordnet ist, wie in Figur 3 dargestellt.

Die hohlzylindrische Hülse 60 hat einen teilkreisförmigen Querschnitt, der wie beispielsweise in Figur 5 abgebildet in etwa 2/3-kreisförmig ist, oder wie in Figur 3 abgebildet U-förmig schellenartig um die Stellstange 3 liegen. Wie anhand der Figuren 1 und 2 zu erkennen, kann das Gleitlager 71 an der Hülse 60 festgelegt sein. In Bezug auf die Hubachse H erstreckt sich die Hülse 60 in montiertem Zustand über einen Großteil der lichten Weite j des Jochs 140. Die axiale Höhe der Hülse 60 kann beispielsweise im Bereich 50 % bis 80 % der lichten Jochweite j liegen. Die Hülse 60 weist eine teilumfängliche Öffnung 65 zum Einsetzen der Stellstange 3 auf. Die Öffnung 65 erstreckt sich in der Radialrichtung von der Aufnahme 5 für die Stellstange quer durch die Hülse 60.

Die Hülse 60 ist aus mehreren Kreisabschnitten 61, 62 zusammengesetzt. Der erste Kreisabschnitt 61 kann eine größere Umfangserstreckung aufweisen als der zweite Kreisabschnitt 62. Die erste Sensiereinrichtung 53 und gegebenenfalls die zweite Sensiereinrichtung 54 sind am ersten Kreisabschnitt 61 befestigt. Am zweiten Kreisabschnitt 62 ist der Richtmagnet 51 befestigt. Die Hülse 60 kann einstückig sein, wobei die Kreisabschnitte 61, 62 mit einem Festkörpergelenk 63 verbunden sind. In Umfangsrichtung erstreckt sich der erste Kreisabschnitt 61 über etwa 135° bis 180° und der zweite Kreisabschnitt über etwa 90° bis 135°. In der Umfangsrichtung zwischen den Kreisabschnitten 61, 62 ist einerseits das Festkörpergelenk 63 und andererseits die Aufnahmeöffnung 65 vorgesehen. Die Sensiereinrichtungen 53 und 54 sind um 90° versetzt am ersten Kreisabschnitt 61 befestigt. Bei der hier dargestellten Ausführungsform sind sowohl die erste Sensiereinrichtung 53 zum Erfassen der ersten Spur 33 als auch die zweite Sensiereinrichtung 54 zur Erfassung der zweiten Spur 34 als magnetoresistiver Sensor, beispielsweise als GLM-Sensor, ausgeführt. Korrespondierend dazu sind an der Stellstange 3 zwei um 90° versetzte Spuren 33, 34 vorgesehen, die sich jeweils in der Haupterstreckungsrichtung der Stellstange 3 erstrecken, wie Figur 6 zeigt.

Figur 6 zeigt zwei gleichartige Spuren 33, 34 der Stellstange 3, die durch eine jeweilige Zahnstruktur realisiert sind. Die Zahnstruktur ist gebildet durch Ausnehmungen in Form paralleler Querrillen, die in die Stellstange 3 eingebracht sind. Die erste Spur 33 und die zweite Spur 34 unterscheidet sich durch das jeweilige Modul m₁ bzw. m₂ der Zahlstrukturen. Die beiden Zahnstrukturen haben jeweils ein konstantes Modul m₁, m₂, durch das die Periode der aufeinander in Haupterstreckungsrichtung der Stellstange 3 abwechselnden Stege und Ausnehmungen definiert ist. Beispielsweise kann das zweite Modul m₂ 10 % größer sein als das erste Modul m₁, sodass eine Nonius-artige Struktur vorliegt. Das jeweilige erste oder zweite Modul m₁ oder m₂ ist kleiner oder gleich der Periodenlänge der jeweils zugeordneten Sensiereinrichtung. Auf diese Weise lässt sich eine absolute Positionsmessung hoher Präzision mit einfachen Mitteln realisieren.

Es ist denkbar, dass an der Stellstange 3 eine dritte Spur mit einem dritten Modul vorgesehen ist, und an der Messvorrichtung 5 eine zur dritten Spur korrespondierende dritte Sensiereinrichtung, um eine noch höhere Messauflösung erreichen zu können (nicht abgebildet). Die Breite der Spuren 33, 34 in der Haupterstreckungsrichtung der Stellstange 3 legt den Messbereich b des Position- und/oder Wegmesssystem 1 fest. Die hohe Präzision des Messsystems 1 ist dank der genauen Orientierung der Stellstange 3 in Relation zu der Messvorrichtung 5 bzw. der Spuren relativ zu den ihnen zugeordneten Sensiereinrichtung mittels der Justiereinrichtung realisierbar.

Die in der vorstehenden Beschreibung, den Figuren und Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Positions- und/oder Wegmesssystem
- 3: Stellstange
- 5: Messvorrichtung
- 7: Montageflansch
- 31: Richtstruktur
- 33, 34: Spur
- 41: Rippe
- 43: Vertiefung
- 50: Aussparung
- 51: Dauermagnet
- 53, 54: Sensiereinrichtung
- 60: Hülse
- 61: erster Kreisabschnitt
- 62: zweiter Kreisabschnitt
- 63: Festkörpergelenk
- 65: Aufnahmeöffnung
- 71: Gleitlager
- 73: Ringspalt
- 100: Stellventil
- 110: Ventilgehäuse
- 111: Inneres
- 115: Deckelabschnitt
- 116: Austrittsöffnung
- 117: Dichtpackung
- 120: Ventilglied
- 121: Eingang
- 125: Durchgang
- 129: Ausgang
- 130: Stellaktor
- 140: Joch
- δ: Drehversatz
- b: Messbereich
- h: Hubweg
- j: lichte Jochweite
- m₁: erstes Modul
- m₂: zweites Modul
- s: stellantriebsseitige Eintauchtiefe
- v: ventilseitige Eintauchtiefe
- H: Hubachse

## Patentansprüche

1. Positions- und/oder Wegmesssystem (1) für ein Stellventil (100) für eine Prozessfluidströmung einer prozesstechnischen Anlage, wie ein Kraftwerk, eine Chemieanlage, eine Lebensmittel verarbeitende Anlage oder dergleichen, umfassend:
eine linearbewegliche Stellstange (3) mit wenigstens einer Haupterstreckungsrichtung und wenigstens einer entlang der Haupterstreckungsrichtung ausgerichteten, kodierten Spur (33, 34),
eine Messvorrichtung (5) mit wenigstens einer vorzugsweise teilkreisförmigen Aussparung (50) zum linearbeweglichen Aufnehmen der Stellstange (3) und wenigstens einer an der Aussparung (50) angeordneten Sensiereinheit (53, 54), die zum vorzugsweise berührungsfreien Erfassen der wenigstens einen Spur (33, 34) ausgelegt und eingerichtet ist, wobei
das Positions- und/oder Wegmesssystem eine im Bereich der Aussparung (50) angeordnete Justiereinrichtung zum Orientieren der Stellstange (3) relativ zur Messvorrichtung (5) umfasst, **dadurch gekennzeichnet , dass**
die Justiereinrichtung die Stellstange (3) relativ zur Aussparung (50) berührungsfrei, vorzugsweise magnetisch, orientiert.

2. Positions- und/oder Wegmesssystem (1) nach Anspruch 1, dadurch **gekenn-zeichnet,** dass die Justiereinrichtung dazu ausgelegt und eingerichtet ist, die Stellstange (3) relativ zur Messvorrichtung (5) mit einem Drehversatz (δ) bezüglich der Haupterstreckungsrichtung von nicht mehr als ±10 °, insbesondere nicht mehr als ±7°, vorzugsweise nicht mehr als ±4° zu orientieren, wobei insbesondere die Justiereinrichtung eine insbesondere formschlüssige Verdrehsicherung umfasst.

3. Positions- und/oder Wegmesssystem (1) nach Anspruch 1 oder 2, dadurch **gekenn-zeichnet,** dass die Aussparung (50) einen Dauermagneten (51) aufweist und die Stellstange (3) eine magnetisierbare oder magnetische Richtstruktur (31).

4. Positions- und/oder Wegmesssystem (1) nach einem der vorstehenden Ansprüche , dadurch **gekenn-zeichnet,** dass die Messvorrichtung (5) eine insbesondere teilkreisförmige Hülse (60) umfasst, die die Aussparung (50) definiert und die wenigstens eine Sensiereinheit (53, 54) trägt.

5. Positions- und/oder Wegmesssystem (1) nach Anspruch 4, dadurch **gekennzeic h-net,** dass
die Stellstange (3) wenigstens eine entlang der Haupterstreckungsrichtung ausgerichtete, kodierte zweite Spur aufweist, wobei vorzugweise die zweite Spur relativ zur ersten Spur in Umfangsrichtung versetzt, beispielsweise um 60° oder 90° versetzt, angeordnet ist,
und dass die Hülse wenigstens eine zweite Sensiereinheit (54) trägt, wobei die zweite Sensiereinheit (54) zum vorzugsweise berührungsfreien Erfassen der zweiten Spur ausgelegt und eingerichtet ist, wobei vorzugweise die zweite Sensiereinheit (54) relativ zur ersten Sensiereinheit in Umfangsrichtung versetzt, beispielsweise um 60° oder 90° versetzt, angeordnet ist, wobei vorzugsweise der Versatz der Sensiereinheiten (53, 54) zum Versatz der Spuren (33, 34) korrespondiert.

6. Positions- und/oder Wegmesssystem (1) nach Anspruch 4 oder 5, dadurch **gekenn-zeichnet,** dass die Hülse (60) einen ersten Kreisabschnitt (61) aufweist, an dem die wenigstens eine Sensiereinheit (53) sowie gegebenenfalls die zweite und/oder eine weitere Sensiereinheit (54) angeordnet sind, und dass die Hülse (60) wenigstens einen zweiten Kreisabschnitt (62) aufweist, der, vorzugsweise mittels eines Festkörpergelenks (63), beweglich mit dem ersten Kreisabschnitt (61) verbunden ist, wobei der erste Kreisabschnitt (61) eine teilumfängliche Öffnung (65) zum Einsetzen der Stellstange (3) aufweist und/oder wobei der zweite Kreisabschnitt (62) in Radialrichtung zumindest abschnittsweise diametral gegenüber dem ersten Kreisabschnitt (61) angeordnet ist, wobei insbesondere die Justiereinrichtung am zweiten Kreisabschnitt (62) angeordnet ist.

7. Positions- und/oder Wegmesssystem (1) einem der Ansprüche Anspruch 5 oder 6, **dadurch gekennzeichnet, dass** die erste Spur (33) ein erstes Modul (m1) definiert und dass die zweite Spur (34) ein zweites Modul (m2) definiert, wobei vorzugsweise das kleinste gemeinsame Vielfache des ersten und des zweiten Moduls ein ungerades Vielfaches des ersten und/oder zweiten Moduls ist und/oder wobei das zweite Modul 2% bis 50%. insbesondere 3 % bis 30%, vorzugsweise im Bereich 5% bis 25%, besonders bevorzugt im Bereich 7% bis 15%, größer ist als das erste Modul.

8. Positions- und/oder Wegmesssystem (1) einem der Ansprüche Ansprüche 5 bis 7, **dadurch gekennzeichnet, dass** die Stellstange (3) wenigstens eine entlang der Haupterstreckungsrichtung ausgerichtete, kodierte dritte Spur aufweist und dass die Hülse wenigstens eine dritte Sensiereinheit trägt, wobei die dritte Sensiereinheit zum vorzugsweise berührungsfreien Erfassen der dritten Spur ausgelegt und eingerichtet ist, wobei insbesondere die dritte Spur ein drittes Modul definiert.

9. Positions- und/oder Wegmesssystem (1) einem der vorstehenden Ansprüche, **dadurch gekennzeichnet, dass** die wenigstens eine Spur (33, 34) magnetisch kodiert ist und dass die Sensiereinrichtung (53, 54) eine Magnetsensorik, wie eine AMR-Sensorik, TMR-Sensorik oder AMR-Sensorik, beispielsweise eine GLM-Sensorik, umfasst., und/oder dass die wenigstens eine Spur (33, 34) optisch kodiert ist und dass die Sensiereinrichtung (53, 54) eine optische Sensorik umfasst, und/oder dass die wenigstens eine Spur (33, 34) eine Vielzahl von, insbesondere ringförmigen oder ringsegmentförmigen, Vorsprüngen an der Stellstange (3) umfasst.

10. Positions- und/oder Wegmesssystem (1) einem der Ansprüche 1 bis 9, dadurch **geke nnzeichnet** , dass die wenigstens eine Spur (33, 34) eine Vielzahl von Ausnehmungen in der Stellstange (3) umfasst, wobei insbesondere die Ausnehmungen mit einem für die Sensiereinrichtung (53, 54) kontrastierenden und/oder transparenten Material gefüllt sind.

11. Positions- und/oder Wegmesssystem (1) nach Anspruch 10, dadurch **gekenn-zei chnet,** dass die Stellstange (3) im Bereich der Spur (33, 34) eine glatte, vorzugsweise rotationssymmetrische, Umfangsoberfläche aufweist, wobei vorzugsweise die Umfangsoberfläche mit einer für die Sensiereinrichtung (53, 54) zumindest teilweise oder vollständig transparenten Beschichtung umgeben ist.

12. Positions- und/oder Wegmesssystem (1) nach einem der vorstehenden Ansprüche, **dadurch gekennzeichnet, dass** die Messvorrichtung (5) einen Montageflansch (7) zum Befestigen der Messvorrichtung (5) an dem Stellventil (100), insbesondere einem Joch (140), aufweist, wobei die Aussparung (50) drehbeweglich, insbesondere mit einer Gleitlagerung, mit dem Montageflansch (7) verbunden ist.

13. Stellventil (100) für eine Prozessfluidströmung einer prozesstechnischen Anlage, wie ein Kraftwerk, eine Chemieanlage, eine Lebensmittel verarbeitende Anlage oder dergleichen, umfassend:
ein Positions- und/oder Wegmesssystem (1) nach einem der vorstehenden Ansprüche,
ein Ventilgehäuse (110) mit einem darin angeordneten Stellglied (120), das von der Stellstange (3) getragen ist, und
ein Stellaktor (130) zum Betätigen der Stellstange (3).

14. Stellventil (100) nach Anspruch 13, **dadurch gekennzeichnet, dass** das Positions- und/oder Wegmesssystem (1) derart auf das Ventilgehäuse (110) abgestimmt ist, dass die wenigsten eine Spur (33, 34) stets außerhalb des Ventilgehäuses (110) angeordnet ist, wobei vorzugsweise das Stellglied (120) dazu beabstandet von der wenigstens eine Spur (33, 34) an der Stellstange (3) angeordnet ist, und/oder dass das Positions- und/oder Wegmesssystem (1) derart auf den Stellaktor (130) abgestimmt ist, dass die wenigsten eine Spur (33, 34) in wenigstens einer Öffnungs- und/oder Schließstellung des Stellglieds (120) innerhalb des Stellaktors (130) angeordnet ist, wobei insbesondere die wenigstens eine Spur (33, 34) vorzugsweise stets in den Stellaktor (130) hinein ragt und die Messvorrichtung innerhalb des Stellaktors (130) angeordnet ist.

15. Stellventil (100) nach Anspruch 13 oder 14, ferner umfassend:
ein Joch (140), das den Stellaktor (130) am Ventilgehäuse (110) befestigt ist und in dem die Stellstange (3) linearbeweglich aufgenommen ist; und
**dadurch gekennzeichnet , dass** die Stellstange (3) entlang eines linearen Hubweges beweglich ist, der größer ist, als die Höhe des Jochs (140) zwischen dem Ventilgehäuse (110) und dem Stellaktor (130).

## Claims

1. Position and/or displacement measuring system (1) for a control valve (100) for a process fluid flow of a process engineering plant, such as a power plant, a chemical plant, a food processing plant or the like, comprising:
a linearly movable control rod (3) with at least one main extension direction and at least one coded track (33, 34) aligned along the main extension direction,
a measuring device (5) with at least one preferably partially circular recess (50) for receiving the control rod (3) in a linearly movable manner and at least one sensing unit (53, 54) arranged at the recess (50), which is designed and configured for preferably contact-free detection of the at least one track (33, 34), wherein
the position and/or displacement measuring system comprises an adjusting device arranged in the region of the recess (50) for orienting the control rod (3) relative to the measuring device (5), **characterized in that**
the adjusting device orients the control rod (3) relative to the recess (50) in a contact-free manner, preferably magnetically.

2. Position and/or displacement measuring system (1) according to claim 1, **characterized in that** the adjusting device is designed and configured to orient the control rod (3) relative to the measuring device (5) with a rotational offset (δ) with respect to the main extension direction of not more than ±10°, in particular not more than ±7°, preferably not more than ±4°, wherein in particular the adjusting device comprises an in particular form-fitting anti-rotation device.

3. Position and/or displacement measuring system (1) according to claim 1 or 2, **characterized in that** the recess (50) has a permanent magnet (51) and the control rod (3) has a magnetizable or magnetic directional structure (31).

4. Position and/or displacement measuring system (1) according to any one of the preceding claims, **characterized in that** the measuring device (5) comprises an in particular partially circular sleeve (60), which defines the recess (50) and carries the at least one sensing unit (53, 54).

5. Position and/or displacement measuring system (1) according to claim 4, **characterized in that**
the control rod (3) has at least one coded second track aligned along the main extension direction, wherein preferably the second track is arranged offset relative to the first track in the circumferential direction, for example offset by 60° or 90°,
and **in that** the sleeve carries at least one second sensing unit (54), wherein the second sensing unit (54) is designed and configured for preferably contact-free detection of the second track, wherein preferably the second sensing unit (54) is arranged offset relative to the first sensing unit in the circumferential direction, for example offset by 60° or 90°, wherein preferably the offset of the sensing units (53, 54) corresponds to the offset of the tracks (33, 34).

6. Position and/or displacement measuring system (1) according to claim 4 or 5, **characterized in that** the sleeve (60) has a first circular section (61), at which the at least one sensing unit (53) and optionally the second and/or a further sensing unit (54) are arranged, and **in that** the sleeve (60) has at least one second circular section (62), which is movably connected to the first circular section (61), preferably by means of a flexure bearing (63), wherein the first circular section (61) has a partially circumferential opening (65) for inserting the control rod (3) and/or wherein the second circular section (62) is arranged in the radial direction at least in sections diametrically opposite the first circular section (61), wherein in particular the adjusting device is arranged at the second circular section (62).

7. Position and/or displacement measuring system (1) according to any one of claims 5 or 6, **characterized in that** the first track (33) defines a first module (m1) and **in that** the second track (34) defines a second module (m2), wherein preferably the smallest common multiple of the first and of the second module is an odd multiple of the first and/or second module and/or wherein the second module is 2% to 50%, in particular 3% to 30%, preferably in the range 5% to 25%, particularly preferably in the range 7% to 15%, larger than the first module.

8. Position and/or displacement measuring system (1) according to any one of claims 5 to 7, **characterized in that** the control rod (3) has at least one coded third track aligned along the main extension direction, and **in that** the sleeve carries at least one third sensing unit, wherein the third sensing unit is designed and configured for preferably contact-free detection of the third track, wherein in particular the third track defines a third module.

9. Position and/or displacement measuring system (1) according to any one of the preceding claims, **characterized in that** the at least one track (33, 34) is magnetically coded and **in that** the sensing device (53, 54) comprises a magnetic sensor system, such as an AMR sensor system, TMR sensor system or AMR sensor system, for example a GLM sensor system, and/or **in that** the at least one track (33, 34) is optically coded and **in that** the sensing device (53, 54) comprises an optical sensor system, and/or **in that** the at least one track (33, 34) comprises a plurality of, in particular annular or ring-segment-shaped, projections on the control rod (3).

10. Position and/or displacement measuring system (1) according to any one of claims 1 to 9, **characterized in that** the at least one track (33, 34) comprises a plurality of recesses in the control rod (3), wherein in particular the recesses are filled with a contrasting and/or transparent material for the sensing device (53, 54).

11. Position and/or displacement measuring system (1) according to claim 10, **characterized in that** the control rod (3) has a smooth, preferably rotationally symmetrical, circumferential surface in the region of the track (33, 34), wherein preferably the circumferential surface is surrounded by a coating which is at least partially or completely transparent for the sensing device (53, 54).

12. Position and/or displacement measuring system (1) according to any one of the preceding claims, **characterized in that** the measuring device (5) has a mounting flange (7) for fastening the measuring device (5) to the control valve (100), in particular a yoke (140), wherein the recess (50) is connected to the mounting flange (7) in a rotationally movable manner, in particular with a sliding bearing.

13. Control valve (100) for a process fluid flow of a process engineering plant, such as a power plant, a chemical plant, a food processing plant or the like, comprising:
a position and/or displacement measuring system (1) according to any one of the preceding claims,
a valve housing (110) with an actuator (120) arranged therein, which is carried by the control rod (3), and
a control actuator (130) for actuating the control rod (3).

14. Control valve (100) according to claim 13, **characterized in that** the position and/or displacement measuring system (1) is matched to the valve housing (110) in such a way that the at least one track (33, 34) is always arranged outside the valve housing (110), wherein preferably the actuator (120) is arranged at a distance from the at least one track (33, 34) on the control rod (3), and/or **in that** the position and/or displacement measuring system (1) is matched to the control actuator (130) in such a way that the at least one track (33, 34) is arranged inside the control actuator (130) in at least one opening and/or closing position of the actuator (120), wherein in particular the at least one track (33, 34) preferably always projects into the control actuator (130) and the measuring device is arranged inside the control actuator (130).

15. Control valve (100) according to claim 13 or 14, further comprising:
a yoke (140), which fastens the control actuator (130) to the valve housing (110) and in which the control rod (3) is received in a linearly movable manner; and
in that the control rod (3) is movable along a linear stroke path, which is greater than the height of the yoke (140) between the valve housing (110) and the control actuator (130).

## Revendications

1. Système de mesure de position et / ou de déplacement (1), destiné à une vanne de régulation (100) pour un écoulement de fluide de processus d'une installation de processus technique, comme une centrale électrique, une installation chimique, une installation traitant des produits alimentaires ou analogues, comprenant :
une barre de réglage (3), déplaçable de manière linéaire, dotée d'au moins une direction d'extension principale et d'au moins une piste (33, 34) codée, alignée le long de la direction d'extension principale,
un dispositif de mesure (5), doté d'au moins une encoche (50), de préférence en forme de portion de cercle, destinée à réceptionner de manière linéairement déplaçable la barre de réglage (3) et au moins une unité de détection (53, 54), placée sur l'encoche (50), qui est conçue et configurée pour détecter de préférence sans contact l'au moins une piste (33, 34),
le système de mesure de position et / ou de déplacement comprenant un système d'ajustage placé dans la zone de l'encoche (50), pour l'orientation de la barre de réglage (3) par rapport au dispositif de mesure (5), **caractérisé en ce que**
le système d'ajustage oriente sans contact, de préférence par voie magnétique la barre de réglage (3) par rapport à l'encoche (50).

2. Système de mesure de position et / ou de déplacement (1) selon la revendication 1, **caractérisé en ce que** le système d'ajustage est conçu et configuré pour orienter la barre de réglage (3) par rapport au dispositif de mesure (5) avec un décalage en rotation (δ) en rapport à la direction d'extension principale de pas plus de ± 10 °, notamment de pas plus de ± 7 °, de préférence, de pas plus de ± 4°, notamment le système d'ajustage comprenant un blocage en rotation notamment par complémentarité de forme.

3. Système de mesure de position et / ou de déplacement (1) selon la revendication 1 ou 2, **caractérisé en ce que** l'encoche (50) comporte un aimant permanent (51) et la barre de réglage (3) comporte une structure de dressage (31) magnétisable et ou magnétique.

4. Système de mesure de position et / ou de déplacement (1) selon l'une quelconque des revendications précédentes, **caractérisé en ce que** le dispositif de mesure (5) comprend une douille (60), notamment en forme de portion de cercle, qui définit l'encoche (50) et qui porte au moins une unité de détection (53, 54).

5. Système de mesure de position et / ou de déplacement (1) selon la revendication 4, **caractérisé en ce que**
la barre de réglage (3) comporte au moins une deuxième piste codée, alignée le long de la direction d'extension principale, de préférence la deuxième piste étant placée en décalage dans la direction périphérique par rapport à la première piste, par exemple de la valeur de 60 ° ou de 90°,
et **en ce que** la douille porte au moins une deuxième unité de détection (54), la deuxième unité de détection (54) étant conçue et configurée pour détecter de préférence sans contact la deuxième piste, de préférence la deuxième unité de détection (54) étant placée avec un décalage dans la direction périphérique par rapport à la première unité de détection, par exemple de la valeur de 60 ° ou de 90 °, de préférence, le décalage des unités de détection (53, 54) correspondant au décalage des pistes (33, 34).

6. Système de mesure de position et / ou de déplacement (1) selon la revendication 4 ou 5, **caractérisé en ce que** la douille (60) comporte un premier segment de cercle (61) sur lequel sont placées l'au moins une unité de détection (53), ainsi que le cas échéant la deuxième et / ou l'unité de détection (54) supplémentaire et **en ce que** la douille (60) comporte au moins un deuxième segment de cercle (62), qui est assemblé de manière déplaçable, de préférence au moyen d'une articulation monolithique (63) avec le premier segment de cercle (61), le premier segment de cercle (61) comportant un orifice (65) partiellement périphérique, destiné à insérer la barre de réglage (3) et / ou le deuxième segment de cercle (62) étant placé dans la direction radiale au moins par endroits de manière diamétrale au vis-à-vis du premier segment de cercle (61), notamment le système d'ajustage étant placé sur le deuxième segment de cercle (62).

7. Système de mesure de position et / ou de déplacement (1) selon l'une quelconque des revendications 5 ou 6, **caractérisé en ce que** la première piste (33) définit un premier module (m1) et **en ce que** la deuxième piste (34) définit un deuxième module (m2), de préférence le plus petit multiple commun du premier et du deuxième module étant un multiple impair du premier et / ou du deuxième module et / ou le deuxième module étant supérieur de 2 % à 50 %, notamment de 3 % à 30%, de préférence de l'ordre de 5 % à 25 %, de manière particulièrement préférentielle, de 7 % à 15 % au premier module.

8. Système de mesure de position et / ou de déplacement (1) selon l'une quelconque des revendications 5 à 7, **caractérisé en ce que** la barre de réglage (3) comporte au moins une troisième piste codée, alignée le long de la direction d'extension principale et **en ce que** la douille porte au moins une troisième unité de détection, la troisième unité de détection étant conçue et configurée pour détecter de préférence sans contact la troisième piste, notamment la troisième piste définissant un troisième module.

9. Système de mesure de position et / ou de déplacement (1) selon l'une quelconque des revendications précédents, **caractérisé en ce que** l'au moins une piste (33, 34) est codée magnétiquement et **en ce que** l'unité de détection (53, 54) comprend un système capteur magnétique, comme un système capteur AMR, un système capteur TMR ou un système capteur AMR, par exemple un système capteur GLM, et / ou **en ce que** l'au moins une piste (33, 34) est optiquement codée et **en ce que** l'unité de détection (53, 54) comprend un système capteur optique, et / ou **en ce que** l'au moins une piste (33, 34) comprend une pluralité de saillies, notamment de forme annulaire ou en forme de segments annulaires sur la barre de réglage (3).

10. Système de mesure de position et / ou de déplacement (1) selon l'une quelconque des revendications 1 à 9, **caractérisé en ce que** l'au moins une piste (33, 34) comprend une pluralité d'évidements dans la barre de réglage (3), notamment les évidements étant remplis d'une matière contrastante et / ou transparente pour l'unité de détection (53, 54).

11. Système de mesure de position et / ou de déplacement (1) selon la revendication 10, **caractérisé en ce que** la barre de réglage (3) comporte dans la zone de la piste (33, 34) une surface périphérique lisse, de préférence symétrique en rotation, de préférence la surface périphérique étant entourée d'un revêtement au moins partiellement ou totalement transparent pour l'unité de détection (53, 54).

12. Système de mesure de position et / ou de déplacement (1) selon l'une quelconque des revendications précédentes, **caractérisé en ce que** le dispositif de mesure (5) comporte une bride de montage (7), destinée à fixer le dispositif de mesure (5) sur la vanne de régulation (100), notamment une culasse (140), l'encoche (50) étant assemblée de manière déplaçable en rotation, notamment à l'aide d'un palier lisse avec la bride de montage (7).

13. Vanne de régulation (100), pour un écoulement de fluide de processus d'une installation de processus technique, comme une centrale électrique, une installation chimique, une installation traitant des produits alimentaires ou analogues, comprenant :
un système de mesure de position et / ou de déplacement (1) selon l'une quelconque des revendications précédentes,
un carter de vanne (110), doté d'un actionneur (120) placé dans celui-ci, qui est porté par la barre de réglage (3) et
un actionneur de réglage (130), destiné à actionner la barre de réglage (3).

14. Vanne de régulation (100) selon la revendication 13, **caractérisée en ce que** le système de mesure de position et / ou de déplacement (1) est adapté au carter de vanne (110), de telle sorte que l'au moins une piste (33, 34) soit toujours placée à l'extérieur du carter de vanne (110), de préférence à cette fin, l'actionneur (120) étant placé avec un écart par rapport à l'au moins une piste (33, 34) sur la barre de réglage (3) et / ou **en ce que** le système de mesure de position et / ou de déplacement (1) est adapté à l'actionneur de réglage (130) de telle sorte que, dans au moins une position d'ouverture et / ou de fermeture de l'actionneur (120), l'au moins une piste (33, 34) soit placée à l'intérieur de l'actionneur de réglage (130), notamment l'au moins une piste (33, 34) saillant de préférence toujours à l'intérieur de l'actionneur de réglage (130) et le dispositif de mesure étant placé à l'intérieur de l'actionneur de réglage (130).

15. Vanne de régulation (100) selon la revendication 13 ou 14, comprenant par ailleurs :
une culasse (140), qui fixe l'actionneur de réglage (130) sur le carter de vanne (110) et dans laquelle la barre de réglage (3) est réceptionnée en étant linéairement déplaçable,
**caractérisée en ce que** la barre de réglage (3) est déplaçable le long d'un trajet de course linéaire qui est supérieur à la hauteur de la culasse (140) entre le carter de vanne (110) et l'actionneur de réglage (130).
